(19) Europäisches Patentamt
European Patent Office
Office européen des brevets

(11) EP 0 524 054 B1

(12) **FASCICULE DE BREVET EUROPEEN**

(45) Date de publication et mention de la délivrance du brevet: **05.03.1997 Bulletin 1997/10**

(51) Int. Cl.[6]: **C08F 297/02**, C08F 2/44

(21) Numéro de dépôt: **92401948.2**

(22) Date de dépôt: **07.07.1992**

(54) **Polymérisation de monomères (méth)acryliques**

Polymerisation von (Meth)Acrylmonomere

Polymerisation of (meth)acrylic monomers

(84) Etats contractants désignés:
**AT BE CH DE DK ES FR GB GR IT LI LU NL PT SE**

(30) Priorité: **19.07.1991 FR 9109172**

(43) Date de publication de la demande:
**20.01.1993 Bulletin 1993/03**

(73) Titulaire: **ELF ATOCHEM S.A.**
**92800 Puteaux (FR)**

(72) Inventeurs:
- **Bayard, Philippe**
  **B-4970 Stavelot (BE)**
- **Fayt, Roger**
  **B-4121 Neuville-en-Condroz (BE)**
- **Teyssie, Philippe**
  **B-4121 Neuville-en-Condroz (BE)**
- **Vuillemin, Bruno**
  **F-64000 Pau (FR)**
- **Heim, Philippe**
  **F-64000 Pau (FR)**
- **Varshney, Sunil K.**
  **8-Verdun, Montreal HYG2P7 (CA)**

(74) Mandataire: **Luziau, Nelly et al**
**ELF ATOCHEM S.A.,**
**Département Propriété Industrielle,**
**4-8, Cours Michelet,**
**La Défense 10 - Cedex 42**
**92091 Paris-La-Défense (FR)**

(56) Documents cités:
**EP-A- 0 402 219**
**EP-A- 0 408 429**
**EP-A- 0 430 785**
**DD-A- 138 069**

Remarques:
Le dossier contient des informations techniques présentées postérieurement au dépôt de la demande et ne figurant pas dans le présent fascicule.

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 524 054 B1

Printed by Rank Xerox (UK) Business Services
2.13.15/3.4

## Description

La présente invention concerne un système d'amorçage pour la polymérisation anionique de monomères méthacryliques, acryliques et éventuellement de comonomères vinyliques non acryliques.

Elle est particulièrement utilisable pour l'amorçage de monomères acryliques dont le carbone en $\alpha$ de l'oxygène de l'ester est tertiaire, secondaire et surtout primaire. Nous dirons par la suite acrylate primaire, secondaire ou tertiaire.

Elle concerne aussi l'utilisation d'un tel système d'amorçage pour la préparation, par polymérisation anionique, de copolymères acryliques bi-séquencés, tri-séquencés ainsi que de copolymères séquencés en étoile, dans lesquels une séquence peut provenir d'un monomère vinylique non-acrylique.

Le document DD-A-138069 décrit la préparation du polybutadiène ou de copolymère butadiène/styrène en présence d'un initiateur et d'un étheralcoolate de métal alcalin, comme l'éther monométhylique d'éthylène glycol. Les polymères obtenus sont des polybutadiènes ayant une teneur en configuration 1,2 comprise entre 40 et 60 %. La répartition du poids moléculaire (c'est-à-dire la polydispersité) n'est pas étroite. Ce document ne décrit pas la polymérisation de monomères (méth)acryliques ou de copolymères acryliques séquencés.

Le brevet EP-A-402219 décrit un système d'amorçage pour la polymérisation anionique de (méth)acrylates et, éventuellement, de comonomères vinyliques ; ce système d'amorçage comprend (1) au moins un amorceur de formule R-M dans laquelle M désigne un métal choisi parmi les métaux alcalins et alcalino-terreux et R désigne un radical alkyle à chaîne droite ou ramifiée contenant de 2 à 6 atomes de carbone ou un radical aryle ou arylalkyle et (2) au moins un alcoolate de métal alcalin de formule $R_1OM_1$ où $R_1$ est un radical alkyle à chaîne droite ou ramifiée ayant de 1 à 6 atomes de carbone ou un radical aryle ou arylakyle et $M_1$ désigne un métal alcalin, avec la condition que, lorsque $M_1$ est du lithium, R désigne un radical aryle ou arylalkyle.

Ce système d'amorçage permet d'obtenir, avec des rendements satisfaisants (au moins 70 %), par polymérisation anionique, des homopolymères d'acrylates d'alkyle primaire ayant une masse moléculaire moyenne en nombre comprise entre 2000 et 200 000 environ et un indice de polydispersité des masses moléculaires (défini comme le rapport de la masse moléculaire moyenne en poids à la masse moléculaire moyenne en nombre Mw/Mn et déterminé par chromatographie d'exclusion) généralement compris entre 1,2 et 3,5 environ.

Le système d'amorçage décrit dans ce brevet EP-A-402 219, permet aussi de fabriquer, par polymérisation anionique avec des rendements de 100 %, des polymères de monomères méthacryliques, particulièrement de méthacrylate de méthyle, ayant une masse moléculaire moyenne en nombre généralement comprise entre 7000 et 150.000 environ et un indice de polydispersité compris entre 1,05 et 2,0 environ. Ces polyméthacrylates sont non-réticulés et comprennent généralement, jusqu'à 60 % de triades isotactiques, de 5 à 50 % de triades hétérotactiques et de 22 à 60 % de triades syndiotactiques.

Le système d'amorçage, défini dans le brevet précédemment mentionné, permet aussi la préparation de copolymères biséquencés de structure A-B dans laquelle A représente une séquence de monomère méthacrylique, d'acrylate d'alkyle secondaire ou tertiaire ou de monomère vinylaromatique, préférentiellement une séquence acrylate tertiaire ou vinylaromatique, et B représente une séquence d'un acrylate d'alkyle primaire, le poids moléculaire moyen en nombre de la séquence A étant compris entre 2000 et 300.000 environ, le poids moléculaire moyen en nombre de la séquence B étant compris entre 2000 et 200.000 environ et l'indice de polydispersité du copolymère biséquencé étant compris entre 1,2 et 2,2 environ.

Avec le système d'amorçage décrit au brevet précédemment mentionné, on peut, dans certains cas, obtenir des homopolymères d'acrylate d'alkyle primaire, comme ceux d'acrylate de n-butyle, avec un bon rendement et une polydispersité de 1,2 à 3,5. On cherche cependant à obtenir des homopolymères avec un plus haut rendement et une polydispersité plus faible pour obtenir, ensuite, par exemple, des polymères fonctionnalisés avec un bon rendement.

En outre, l'homopolymère d'acrylate primaire présente une température de transition vitreuse plus basse que l'homopolymère d'acrylate tertiaire analogue. Il est donc intéressant du point de vue du caractère élastomère. L'homopolymère élastomère seul n'a cependant pas de bonnes propriétés mécaniques. Seuls les copolymères séquencés, contenant une séquence de cet élastomère, sont intéressants, les autres séquences ayant notamment une température de transition vitreuse élevée (> 100°C).

On cherche donc particulièrement que cet homopolymère d'acrylate primaire reste vivant après la polymérisation de telle manière à pouvoir générer, grâce à lui, un copolymère séquencé par ajout d'un autre monomère méthacrylique ou vinyle non acrylique.

En ce qui concerne les homopolymères de méthacrylates d'alkyle, le système d'amorçage décrit dans le brevet EP-A-402 219 permet de les obtenir avec des rendements excellents, puisque ceux-ci comme le montrent les exemples, atteignent 100 %. Cependant, ces polymères comprennent de 25 à 60 % de triades syndiotactiques. Or, il est connu que le caractère syndiotactique du polymère de méthacrylate influence sa température de transition vitreuse.

Il est connu que l'on recherche à obtenir des polymères de méthacrylate ayant une température de transition vitreuse élevée leur conférant, notamment, des propriétés de bonne tenue à la chaleur.

En outre, si le système d'amorçage décrit dans le brevet EP-A-402 219 permet d'obtenir, avec des rendements élevés, des copolymères biséquencés solides, de poids moléculaire élevé, associant une séquence d'acrylate d'alkyle primaire à une séquence de méthacrylate d'alkyle, d'acrylate d'alkyle secondaire ou tertiaire ou de monomère vinylaromatique, et ceci sans les inconvénients qui résultent notamment d'une cinétique défavorable de l'étape de polymérisation du méthacrylate d'alkyle, il est lié à un procédé de préparation spécifique, en ce sens qu'on réalise, nécessairement dans une première étape, la polymérisation anionique du monomère A (c'est-à-dire de monomère méthacrylique, d'acrylate d'alkyle secondaire ou tertiaire ou de monomère vinylaromatique) de manière à obtenir un chaînon vivant de la séquence polymère A, puis, dans une seconde étape, on fait réagir le chaînon vivant ainsi obtenu avec le monomère B (acrylate d'alkyle primaire).

Avec un tel système d'amorçage, il n'est pas possible d'obtenir une séquence polymère vivante à partir d'un acrylate d'alkyle primaire. Ainsi, la variété de polymères séquencés que l'on peut obtenir est limitée à une structure du type A-B, tel que défini précédemment.

Ceci pose particulièrement un problème lorsque l'on souhaite préparer des polymères triséquencés ou en étoile, de propriétés particulières, comprenant par exemple une séquence centrale souple (acrylate d'alkyle primaire) et des séquences dures (méthacrylate de méthyle) aux extrémités, utiles comme élastomères thermoplastiques ou comme additifs dans les formulations d'adhésifs sensibles à la pression.

La présente invention a donc pour but un nouveau système d'amorçage pour la polymérisation anionique de monomères (meth)acryliques et, éventuellement de comonomères vinyliques non-acryliques qui conduisent notamment à la préparation :

- de polymères d'acrylate d'alkyle primaire à polydispersité aussi faible que 1,05 et vivants ;
- de polymères de méthacrylate d'alkyle ayant un pourcentage élevé de triades syndiotactiques et obtenus en milieu apolaire ;
- de copolymères séquencés associant des séquences d'acrylate d'alkyle primaire à des séquences de monomère méthacrylique, d'acrylate d'alkyle secondaire ou tertiaire ou de monomère vinylique non-acrylique. Plus particulièrement, l'invention vise à obtenir des copolymères biséquencés polyméthacrylate de méthyle-b-polyacrylate primaire qui sont particulièrement intéressants d'un point de vue industriel, avec un meilleur rendement et une meilleure polydispersité comparé à ceux obtenus dans le cas du brevet EP -A- 402 219.

Le système d'amorçage selon l'invention, pour la polymérisation anionique de monomères (méth) acryliques et éventuellement de comonomères vinyliques non acryliques, comprend (1) au moins un amorceur fonctionnel et (2) un alcoolate de métal alcalin et il est caractérisé en ce que l'alcoolate a la formule R′OM′ dans laquelle M′ est un métal alcalin et R′ a la formule :

$$R^1 (OR^2)m$$

dans laquelle $R^1$ est un radical alkyle linéaire ou ramifié ayant de 1 à 6 atomes de carbone ou un radical arylalkyle, $R^2$ est un radical alkylène linéaire ou ramifié ayant de 2 à 4 atomes de carbone et m est le nombre entier 1, 2 ou 3.

Le radical $R^1$ peut être le radical méthyle, éthyle, butyle, benzyle. $R^1$ est avantageusement le radical méthyle. Le radical $R^2$ peut être le radical éthylène, propylène, butylène, isopropylène ; il est de préférence le radical éthylène. M′ est le lithium, le sodium ou le potassium et représente, de préférence, le lithium. m est de préférence égal à 2.

L'amorceur du système d'amorçage selon l'invention peut être tout amorceur connu, mono- ou bi-fonctionnel.

L'amorceur monofonctionnel peut être choisi notamment parmi les composés de formule :

$$(R)_p\text{-}M$$

dans laquelle :

M désigne un métal alcalin ou alcalino-terreux (valence p de 1 ou 2) ; et
R désigne un radical alkyle à chaîne droite ou ramifiée contenant 2 à 6 atomes de carbone, ou un radical aryle, éventuellement substitué, ou un radical alkyle contenant 1 à 6 atomes de carbone substitué par au moins un groupe phényle.

De tels amorceurs monofonctionnels sont, par exemple, le sec.-butyllithium, le n-butyllithium, l'alphaméthylstyryllithium, le 1,1-diphénylhexyllithium, le diphénylméthyllithium $(Ph)_2CHLi$ ou -sodium ou -potassium et le 1,1-diphényl-3-méthylpentyllithium.

L'amorceur bifonctionnel peut être choisi notamment parmi les composés tels que le 1,1,4,4-tétraphényl-1,4-dilithio-butane (TPDLB), le 1,1,4,4-tétraphényl-1,4-disodiobutane, le naphtalène lithium, le naphtalène sodium, le naphtalène potassium et leurs homologues.

Le rapport molaire de l'alcoolate de métal alcalin à l'amorceur dans le système d'amorçage selon l'invention peut varier dans des limites très larges.

La quantité d'alcoolate doit être suffisante pour permettre la formation d'un complexe avec le centre actif de polymérisation et, ainsi stabiliser ce dernier. La quantité d'alcoolate dépend de l'amorceur choisi et du ou des monomères à polymériser. Le rapport molaire alcoolate/amorceur, selon l'invention est compris entre 1 et 50.

Pour l'obtention des meilleurs résultats, ce rapport est compris de préférence entre 5 et 10.

Le système d'amorçage selon l'invention est particulièrement utile pour la polymérisation de monomères acryliques (acrylates d'alkyle primaire, secondaire ou tertiaire), et de monomères méthacryliques.

On peut aussi l'utiliser pour préparer des copolymères acryliques biséquencés, triséquencés ou en étoile, associant des séquences acryliques et, éventuellement, des séquences de monomères vinyliques non-acryliques, comme le butadiène, l'isoprène et les monomères vinylaromatiques.

La polymérisation, réalisée en présence du système d'amorçage selon l'invention, a lieu de préférence en l'absence d'humidité et d'oxygène, et en présence d'au moins un solvant non protique polaire ou apolaire choisi de préférence parmi le benzène, le toluène, le tétrahydrofurane, le diglyme, le tétraglyme, l'orthoterphényle, le biphényle, la décaline ou encore la tétraline.

La température de polymérisation peut varier entre -100°C et +60°C environ et, de préférence, elle est inférieure à -40°C environ.

Le système d'amorçage selon l'invention est utile pour la polymérisation d'acrylate d'alkyle primaire. Par acrylate d'alkyle primaire au sens de la présente invention, on entend ceux dont le groupe alkyle, le cas échéant substitué par au moins un atome d'halogène comme le chlore ou le fluor, contient de 1 à 18 atomes de carbone, plus particulièrement l'acrylate de méthyle, l'acrylate d'éthyle, l'acrylate de n-propyle, l'acrylate de n-butyle, l'acrylate d'isobutyle, l'acrylate de n-hexyle, l'acrylate de 2,2,2-trifluoroéthyle, l'acrylate de 2-éthylhexyle, l'acrylate de lauryle ou l'acrylate de stéaryle.

Notamment, il est possible d'obtenir, avec des rendements élevés, des homopolymères d'acrylate d'alkyle primaire ayant une masse moléculaire moyenne en nombre (Mn) compris entre 1 000 et 200 000 et un indice de polydispersité des masses moléculaires (Mw/Mn) compris entre 1,05 et 3,30 Ces homopolymères sont vivants, ce qui permet de préparer des polymères séquencés.

Le système d'amorçage est aussi utile pour la polymérisation d'acrylate d'alkyle secondaire ou tertiaire, tels que les acrylates d'isopropyle, de sec-butyle ou de tertiobutyle, de monomères méthacryliques.

Par monomère méthacrylique au sens de la présente invention, on entend un monomère choisi parmi les méthacrylates d'alkyle dont le radical alkyle, le cas échéant substitué, par exemple par au moins un atome d'halogène comme le chlore ou le fluor, contient 1 à 18 atomes de carbone, comme les méthacrylates de méthyle, d'éthyle, de 2,2,2-trifluoroéthyle, de n-propyle, d'isopropyle, de n-butyle, de sec-butyle, de tert-butyle, de n-amyle, d'i-amyle, d'hexyle, d'éthyl-2-hexyle, de cyclohexyle, d'octyle, d'i-octyle, de décyle, ainsi que le méthacrylate de glycidyle, le méthacrylate de norbornyle, le méthacrylonitrile et les dialkylméthacrylamides.

Par monomère vinylaromatique au sens de la présente invention, on entend un monomère aromatique à insaturation éthylénique tel que le styrène, le vinyltoluène, l'alphaméthylstyrène, le méthyl-4-styrène, le méthyl-3-styrène, le méthoxy-4-styrène, l'hydroxyméthyl-2-styrène, l'éthyl-4-styrène, l'éthoxy-4-styrène, le diméthyl-3,4-styrène, le chloro-2-styrène, le chloro-3-styrène, le chloro-4 méthyl-3-styrène, le tert-butyl-3-styrène, le dichloro-2,4-styrène, le dichloro-2,6-styrène, le vinyl-1-naphtalène, la vinyl-2-pyridine et la vinyl-4-pyridine.

En particulier, le système d'amorçage selon l'invention permet de préparer des polyméthacrylates de méthyle (PMMA) ayant une masse moléculaire moyenne en nombre (Mn) comprise entre 2 000 et 1 000 000 et un indice de polydispersité Mw/Mn compris entre 1,03 et 1,5. Les PMMA ont des pourcentages de triades syndiotactiques supérieures ou égales à 80 % même dans un solvant apolaire, ce qui leur confère une température de transition vitreuse d'environ 130°C et donc une plus haute résistance à la chaleur que des PMMA préparés par polymérisation radicalaire.

Avec le système d'amorçage selon l'invention, on peut aussi obtenir des polymères de monomère vinylaromatique ayant une masse moléculaire moyenne en nombre (Mn) de 2000 à 1000000 et un indice de polydispersité de 1,05 à 1,50.

La polymérisation de monomères en présence du système d'amorçage selon l'invention permet de préparer des séquences en vue de former des copolymères bi- ou tri-séquencés ainsi que des copolymères en étoile, particulièrement des séquences de polymère d'acrylate d'alkyle primaire vivant à partir desquelles on peut préparer ces polymères avec un excellent rendement, puisque sans formation d'homopolymère de l'acrylate.

Notamment, le système d'amorçage selon l'invention est utile pour la préparation de copolymères acryliques biséquencés de structure A-B, dans laquelle A et B peuvent représenter une séquence de monomère acrylique, par exemple acrylate d'alkyle primaire, secondaire ou tertiaire, de monomère méthacrylique ou vinylique non-acrylique, au moins une des séquences étant une séquence acrylique ; ces monomères ont été définis précédemment.

Ces copolymères biséquencés peuvent avoir la structure A-B telle que définie dans le brevet EP-A-402 219 dans laquelle A représente une séquence de monomère acrylate d'alkyle secondaire ou tertiaire, de monomère méthacrylate ou de monomère vinylaromatique et B représente une séquence d'un acrylate d'alkyle primaire. Ces copolymères, obtenus en présence du système d'amorçage selon l'invention, présentent une polydispersité plus étroite (1,06 à 1,45 au lieu de 1,2 à 2,2) que celle obtenue avec le système du brevet EP-A-402 219.

Comme il est possible d'obtenir maintenant une séquence polymère vivante à partir de monomère d'acrylate d'alkyle primaire en utilisant le système d'amorçage selon l'invention, on peut, particulièrement, obtenir des copolymères biséquencés de structure A-B dans laquelle A représente non seulement une séquence de monomère méthacrylique, acrylate d'alkyle secondaire ou tertiaire ou vinylique non acrylique, mais aussi une séquence de monomère acrylate d'alkyle primaire et B représente une séquence de monomère méthacrylique, d'acrylate d'alkyle primaire, secondaire ou tertiaire, la masse moléculaire moyenne en nombre du copolymère étant comprise entre 5 000 et 500 000 et l'indice de polydispersité inférieur ou égal à 1,2.

Le système d'amorçage selon l'invention est aussi utile pour la préparation de copolymères triséquencés comportant au moins une séquence acrylique, par exemple, comme il est décrit au brevet EP-A-408 429 et susceptibles de posséder des propriétés permettant leur utilisation notamment dans la fabrication d'articles élastomères.

Selon ce brevet, (1) on conduit une polymérisation anionique d'au moins un monomère A à l'aide d'un système d'amorçage, pour obtenir un chaînon vivant $A^-$, puis (2) on fait réagir ledit chaînon vivant avec au moins un monomère B pour obtenir un copolymère biséquencé vivant $(A\text{-}B)^-$, puis (3) on fait réagir ledit copolymère $(A\text{-}B)^-$ avec au moins un monomère C pour former un copolymère triséquencé vivant $(A\text{-}B\text{-}C)^-$, et enfin, (4) on fait réagir le copolymère $(A\text{-}B\text{-}C)^-$ avec au moins un composé protolytique.

Selon ce brevet EP-A-408 429, il est aussi possible d'obtenir des copolymères de formule A-B-A. Pour cela, (1) on effectue la polymérisation anionique d'au moins un monomère B à l'aide d'un système d'amorçage constitué par au moins un amorceur bifonctionnel, comme le naphtalène-lithium, le naphtalène-sodium, le 1,4-dilithio-1,1,4,4-tétraphénylbutane, et au moins un ligand choisi parmi les sels de métaux alcalins ou alcalino-terreux, pour obtenir un polymère vivant $^-B^-$, puis (2) on fait réagir ledit polymère $^-B^-$ avec au moins un monomère A pour former un copolymère triséquencé vivant $^-(A\text{-}B\text{-}A)^-$, et enfin (3) on fait réagir le copolymère $^-(A\text{-}B\text{-}A)^-$ avec au moins un composé protolytique.

Par les procédés décrits dans ce brevet EP-A-408 429, on obtient les copolymères triséquencés possédant un poids moléculaire moyen en nombre allant de 3000 à 300 000 environ et une polydispersité des poids moléculaires allant de 1,05 à 2,0 environ, de structure A-B-C dans lesquelles chacun des blocs A, B et C peuvent représenter une séquence de monomère choisi parmi les monomères acryliques, vinylaromatiques, méthacryliques, avec la condition que l'un au moins des blocs A et C soit choisi dans une classe différente de celle du bloc B.

En utilisant, comme système d'amorçage, le système selon la présente invention, on peut obtenir des copolymères triséquencés de type A-B-C, dans lesquels les blocs A, B et C représentent des séquences de monomères acryliques, méthacryliques ou vinyliques non-acryliques tels que définis précédemment, ayant une masse moléculaire moyenne en nombre Mn de 3000 à 500 000 et une polydispersité des masses moléculaires Mw/Mn comprise entre 1,05 et 2,0 et, particulièrement à partir de séquences de polymère d'acrylate d'alkyle primaire.

Le système d'amorçage selon l'invention permet particulièrement d'obtenir des copolymères triséquencés de formule A-B-A dans lesquels les séquences A et B peuvent être des séquences acryliques, vinyliques non-acryliques ou méthacryliques et forment ainsi, par exemple, des familles :

acryliques -b- méthacryliques -b- acryliques
méthacrylique -b- acrylique -b- méthacrylique
(méth) acrylique -b- vinylique - (méth) acrylique

Ces copolymères peuvent avoir une masse moléculaire moyenne en nombre Mn de 3000 à 500 000 et une polydispersité, de 1,05 à 1,30, polydispersité plus étroite que celle obtenue par le procédé décrit dans l'EP-A-408 429.

En particulier, les copolymères triséquencés du type A-B-C ou A-B-A peuvent être préparés, si l'on utilise le système d'amorçage selon l'invention, directement à partir de séquences polymères d'acrylate d'alkyle primaire, comme indiqué précédemment.

Le système d'amorçage selon l'invention est aussi utile pour préparer des copolymères séquencés en étoile à base de séquences vinyliques non acryliques et/ou méthacryliques et de séquences acryliques.

On peut préparer selon l'invention des copolymères en étoile du type de ceux décrits dans EP-A-408420 et peuvent avoir la formule :

$$\left[\begin{array}{c}(PA\text{-}PB\text{-}PC)_n \\ \\ (PD\text{-}PE)_m\end{array}\right] X \qquad (I)$$

dans laquelle,
ou bien :

- PA représente une séquence polymère issue d'au moins un monomère A choisi parmi les monomères vinyliques non acryliques et méthacryliques ;
- PB représente une séquence polymère issue d'au moins un monomère acrylique B ; et
- PC est éventuellement présent, auquel cas il représente une séquence polymère issue d'au moins un monomère C choisi parmi les monomères méthacryliques ;

ou bien :

- PA et PC représentent chacun une séquence polymère issue d'un même monomère acrylique ; et
- PB représente une séquence polymère issue d'au moins un monomère B choisi parmi les monomères méthacryliques ;
- PD représente une séquence polymère issue d'au moins un monomère D choisi parmi les monomères vinyliques non-acryliques et méthacryliques, et simultanément PE représente une séquence polymère issue d'au moins un monomère acrylique E ;

ou bien PD représente une séquence polymère issue d'au moins un monomère acrylique D, et simultanément PE représente une séquence polymère issue d'au moins un monomère méthacrylique E ;

- n représente le nombre de branches de (PA-PB-PC) et est compris entre 2 et 50 inclus, et m représente le nombre de branches de (PD-PE) et est compris entre 0 et 18 inclus, à la condition que la somme n+m ne dépasse pas la valeur de 50 ;
- chacune des branches (PA-PB-PC) et (PD-PE) pouvant par ailleurs ne comporter qu'une seule séquence polymère, auquel cas les deux séquences sont différentes, l'une étant d'un monomère acrylique, et l'autre d'un monomère choisi parmi les monomères vinyliques non-acryliques et méthacryliques ; et
- X représente un nodule réticulé d'au moins un monomère Mr polymérisé, ledit monomère Mr étant constitué par un agent de réticulation multifonctionnel présentant au moins deux doubles liaisons polymérisables par molécule, tel que des polyméthacrylates et polyacrylates de polyols, comme les diméthacrylates d'alkylèneglycol, les diacrylates d'alkylèneglycol.

Pour préparer de tels copolymères en étoile,

**(1)** on conduit la polymérisation anionique d'au moins un monomère A, à l'aide du système amorceur comprenant un amorceur monofonctionnel et au moins un ligand tel que des sels de métaux alcalins pour obtenir un chaînon vivant de la séquence polymère $PA^-$ ; puis
**(2)** on fait réagir ledit chaînon vivant ainsi obtenu avec au moins un monomère B, en présence d'au moins un ligand tel que défini ci-dessus, ce qui permet d'obtenir un copolymère biséquencé vivant $(PA-PB)^-$, puis
**(3)** on fait réagir ledit copolymère biséquencé vivant ainsi obtenu avec au moins un monomère C, en présence d'au moins un ligand tel que défini ci-dessus, ce qui permet d'obtenir le copolymère triséquencé vivant $(PA-PB-PC)^-$ ; l'étape (3) pouvant être omise et le procédé pouvant être commencé en conduisant l'étape (1) avec le monomère B, ou bien l'on ne peut former qu'une séquence vivant $PA^-$ ou $PB^-$ ou $PC^-$ ;
**(4)** le cas échéant, on forme un copolymère biséquencé vivant $(PD-PE)^-$ en procédant comme en (1) et (2), mais en partant d'au moins un monomère D et d'au moins un monomère E ; ou bien on forme une séquence vivante $PD^-$ ou $PE^-$ en conduisant l'étape (1) avec les monomères D ou E ;
**(5)** on fait réagir le copolymère vivant $(PA-PB-PC)^-$ ou $(PA-PB)^-$ ou $(PB-PC)^-$ ou la séquence vivante $PA^-$ ou $PB^-$ ou $PC^-$, le cas échéant en mélange avec le copolymère biséquencé vivant $(PD-PE)^-$ ou la séquence vivante $PD^-$ ou $PE^-$ obtenu selon (4), dans le milieu qui a servi à conduire leur polymérisation par voie anionique, avec au moins un monomère Mr en excès molaire de 4 à 26 par centre actif, et on désactive les doubles liaisons par une réaction avec une source de protons consistant notamment en un alcool, de l'eau ou un acide protonique, et
**(6)** le cas échéant, on conduit une transestérification en milieu acide du copolymère en étoile obtenu.

Les copolymères séquencés en étoile décrits dans le brevet EP-A-408 420 peuvent présenter une masse moléculaire moyenne en nombre d'environ 1000 à 500.000 pour chacune des séquences. Leur indice de polydispersité est compris généralement entre 1,1 et 2.

Les séquences de polymères issus de monomères vinyliques non acryliques et de poly(méthacrylate de méthyle) des copolymères en étoile sont des séquences rigides ; les séquences de poly(méthacrylate d'alkyle autre que méthyle) peuvent être des séquences semi-souples ou rigides et les séquences de poly(acrylate d'alkyle) sont des séquences souples conférant la stabilité au vieillissement. En fonction de la teneur en séquences rigides, souples et semi-souples, on obtient pour les polymères en étoile des élastomères thermoplastiques (ayant une composition en séquences souples acryliques de l'ordre de 60-90 % en poids) applicables notamment à la fabrication de pièces moulées par injection, des polymères thermoplastiques rigide choc (ayant une composition en séquences souples de l'ordre de 10-50 % en poids) et des polymères renforçateurs choc de diverses matrices thermoplastiques (pour une composition en séquences souples de l'ordre de 40-80 % en poids).

Le système d'amorçage selon l'invention permet, particulièrement, de préparer des copolymères en étoile de forme

$$(PA\text{-}PB)_nX$$

dans laquelle PA et PB représentent des séquences acryliques, particulièrement acrylate d'alkyle primaire, méthacryliques ou vinyliques non acryliques, l'une au moins des séquences étant une séquence acrylique.

Les copolymères séquencés en étoile obtenus selon l'invention peuvent présenter une masse moléculaire moyenne en nombre comprise entre 1000 et 500 000 pour chacune de leur séquence. Leur indice de polydispersité est compris généralement entre 1,1 et 2,0.

Ils sont particulièrement utiles en tant qu'élastomères thermoplastiques et modifiants rhéologiques.

Les exemples suivants, non limitatifs, illustrent l'invention.

Les exemples 1 à 13 concernent la polymérisation de monomères acryliques primaires, secondaires ou tertiaires ou de monomères vinyliques en présence du système d'amorçage selon l'invention.

Les exemples 14 et 15 montrent le caractère vivant des macroanions obtenus à partir d'acrylates d'alkyle primaires, en utilisant le système d'amorçage selon l'invention. Cela permet la synthèse directe de copolymères biséquencés, triséquencés de type A-B-A ou de copolymères étoilés $(PA\text{-}PB)_n$-X.

Les exemples 16 à 21 décrivent la préparation de copolymères biséquencés.

Les exemples 22 à 24 décrivent la préparation de copolymères triséquencés.

Les exemples 25 et 26 concernent la préparation de copolymères étoilés.

Dans les exemples donnés ci-après, les alcoolates ROLI, utilisés dans l'invention, sont les suivants :

$CH_3(OCH_2CH_2)OLi$
$CH_3(OCH_2CH_2)_2$ OLi
$CH_3(OCH_2CH_2)_3$ OLi
nBu $(OCH_2CH_2)_2$ OLi
Et $(OCH_2CH_2)_2$ OLi

Les alcoolates sont préparés, par exemple, par réaction du méthoxyethoxyéthanol avec toute base dont le PKA est supérieur au PKA du couple Méthoxyéthoxyéthanolate/Méthoxyethoxyéthanol.

Ainsi, les éthoxylates de lithium peuvent être préparés par réaction avec du lithium métallique ou par réaction avec un composé organométallique de lithium en solvant polaire ou apolaire.

**Exemples a**

Dans un ballon de 500 ml à deux cols, muni d'un réfrigérant et préalablement séché sous atmosphère d'argon, on introduit 250 ml de THF distillé sur sodium ainsi que 3,5 gr (0,5 mole, 2 éq.) de lithium métallique, préalablement décapé. On introduit ensuite 30 ml (0,25 mole) de méthoxyéthoxyéthanol préalablement séché sur $CaH_2$, par petite portions. Le mélange est reflué pendant 12 heures, après quoi on transvase la solution dans un ballon à un col, à l'aide d'une aiguille capillaire. Cette solution d'environ 1M est conservée à 0°C dans l'obscurité.

**Exemple b**

Dans un ballon de 500 ml préalablement séché sous atmosphère d'argon, on introduit 250 ml de THF distillé sur sodium ainsi que 0,25 mole de méthoxy éthoxyéthanol préalablement séché sur $CaH_2$. On introduit ensuite par petite portion, à température ambiante, 0,25 mole de BuLi en solution dans le n-hexane. Après 5 minutes, la solution légèrement jaune peut être stockée ou utilisée telle quelle pour la polymérisation.

Dans tous les exemples, la masse moléculaire moyenne en nombre et l'indice de polydispersité ont été déterminés par chromatographie d'exclusion effectuée en utilisant un appareil HP 1050 équipé de deux colonnes linéaires, de porosités respectives de 0,01, 0,1, 1 et 10 mm (100, $10^3$, $10^4$ et $10^5$ A°), avec le tétrahydrofuranne comme éluant à un débit de 1 ml/minutes.

**EXEMPLE 1**

Dans un ballon préalablement séché et sous atmosphère d'azote, on introduit 10,0 x $10^{-3}$ mole de $CH_3OCH_2CH_2OLi$ en solution dans le THF. On y ajoute 90 ml de toluène et, sous agitation, au goutte à goutte, 1,0 x

$10^{-3}$ mole de $(Ph)_2CHLi$ en solution 0,2 molaire dans le THF. On porte le mélange à la température de -78°C au moyen d'un mélange d'acétone et de carboglace, puis on ajoute toujours à -78°C, 0,048 mole d'acrylate de 2-éthylhexyle préalablement agité 48 heures sur hydrure de calcium, distillé puis traité sur fluorényl lithium jusqu'à l'apparition d'une couleur jaune et distillé sur triéthylaluminium immédiatement avant la polymérisation. On arrête la réaction après 10 minutes par addition de 5 ml de méthanol acidifié, puis on chasse le solvant. On obtient un polymère d'acrylate de 2-éthylhexyle avec un rendement de 90 %. L'analyse du polymère par GPC montre les caractéristiques suivantes :

$\overline{M}n$ = 23000
$\overline{M}w/\overline{M}n$ = 2,3

**EXEMPLE 2**

Dans un ballon préalablement séché et sous atmosphère d'azote, on introduit 2,0 x $10^{-3}$ mole de $CH_3OCH_2CH_2OLi$ en solution dans le THF. On y ajoute 100 ml de THF préséché et, sous agitation, au goutte à goutte, 1,0 x $10^{-3}$ mole de $(Ph)_2CHLi$ en solution 0,2 molaire dans le THF. On porte le mélange à la température de -78°C au moyen d'un mélange d'acétone et de carboglace, puis on ajoute toujours à -78°C, 0,048 mole d'acrylate de 2-éthylhexyle préalablement agité 48 heures sur hydrure de calcium, distillé puis traité sur fluorényl lithium jusqu'à l'apparition d'une couleur jaune et distillé sur triéthylaluminium immédiatement avant la polymérisation. On arrête la réaction après 10 minutes par addition de 5 ml de méthanol acidifié, puis on chasse le solvant. On obtient un polymère d'acrylate d'éthylhexyle avec un rendement de 95 %. L'analyse du polymère par GPC montre les caractéristiques suivantes :

$\overline{M}n$ = 29000
$\overline{M}w/\overline{M}n$ = 3,3

**EXEMPLE 3**

Dans un ballon préalablement séché et sous atmosphère d'azote, on introduit 1,0 x $10^{-3}$ mole de $CH_3OCH_2CH_2OLi$ en solution dans le THF. On y ajoute 90 ml de toluène et, sous agitation, au goutte à goutte, 1,0 x $10^{-3}$ mole de $(Ph)_2CHLi$ en solution 0,2 molaire dans le THF. On porte le mélange à la température de -78°C au moyen d'un mélange d'acétone et de carboglace, puis on ajoute toujours à -78°C, 0,070 mole d'acrylate de n-butyle préalablement agité 48 heures sur hydrure de calcium, distillé puis traité sur fluorényl lithium jusqu'à l'apparition d'une couleur jaune et distillé sur triéthylaluminium immédiatement avant la polymérisation. On arrête la réaction après 30 minutes par addition de 5 ml de méthanol acidifié, puis on chasse le solvant. On obtient un polymère d'acrylate de n-butyle avec un rendement de 80 %. L'analyse du polymère par GPC montre les caractéristiques suivantes :

$\overline{M}n$ = 22000
$\overline{M}w/\overline{M}n$ = 3,3

**EXEMPLE 4**

Dans un ballon préalablement séché et sous atmosphère d'azote, on introduit 2,0 x $10^{-3}$ mole de $CH_3(OCH_2CH_2)_2OLi$ en solution dans le THF. On y ajoute 90 ml de toluène et 5 ml de THF préséché et, sous agitation, au goutte à goutte, 0,2 x $10^{-3}$ mole de $(Ph)_2CHLi$ en solution 0,2 molaire dans le THF. On porte le mélange à la température de -78°C au moyen d'un mélange d'acétone et de carboglace, puis on ajoute toujours à -78°C, 0,048 mole d'acrylate de 2-éthylhexyle préalablement agité 48 heures sur hydrure de calcium, distillé puis traité sur fluorényl lithium jusqu'à l'apparition d'une couleur jaune et distillé sur triéthylaluminium immédiatement avant la polymérisation. On arrête la réaction après 1 minute par addition de 5 ml de méthanol acidifié, puis on chasse le solvant. On obtient un polymère d'acrylate de 2-éthylhexyle avec un rendement de 100 %. L'analyse du polymère par GPC montre les caractéristiques suivantes :

$\overline{M}n$ = 36600
$\overline{M}w/\overline{M}n$ = 1,08

**EXEMPLE 5**

Dans un ballon préalablement séché et sous atmosphère d'azote, on introduit 2,0 x $10^{-3}$ mole de $CH_3(OCH_2CH_2)_2OLi$ en solution dans le THF. On y ajoute 90 ml de toluène et 8 ml de THF préséché et, sous agitation, au goutte à goutte, 1,0 x $10^{-3}$ mole de $(Ph)_2CHLi$ en solution 0,2 molaire dans le THF. On porte le mélange à la température de -78°C au moyen d'un mélange d'acétone et de carboglace, puis on ajoute toujours à -78°C, 0,048 mole

d'acrylate de 2-éthylhexyle préalablement agité 48 heures sur hydrure de calcium, distillé puis traité sur fluorényl lithium jusqu'à l'apparition d'une couleur jaune et distillé sur triéthylaluminium immédiatement avant la polymérisation. On arrête la réaction après 10 minutes par addition de 5 ml de méthanol acidifié, puis on chasse le solvant. On obtient un polymère d'acrylate de 2-éthylhexyle avec un rendement de 90 %. L'analyse du polymère par GPC montre les caractéristiques suivantes :

$\overline{M}n = 27000$
$\overline{M}w/\overline{M}n = 1,7$

## EXEMPLE 6

Dans un ballon préalablement séché et sous atmosphère d'azote, on introduit 2,0 x $10^{-3}$ mole de $CH_3(OCH_2CH_2)_2OLi$ en solution dans le THF. On y ajoute 100 ml de THF préséché et, sous agitation, au goutte à goutte, 1,0 x $10^{-3}$ mole de $(Ph)_2CHLi$ en solution 0,2 molaire dans le THF. On porte le mélange à la température de -78°C au moyen d'un mélange d'acétone et de carboglace, puis on ajoute toujours à -78°C, 0,048 mole d'acrylate de 2-éthylhexyle préalablement agité 48 heures sur hydrure de calcium, distillé puis traité sur fluorényl lithium jusqu'à l'apparition d'une couleur jaune et distillé sur triéthylaluminium immédiatement avant la polymérisation. On arrête la réaction après 10 minutes par addition de 5 ml de méthanol acidifié, puis on chasse le solvant. On obtient un polymère d'acrylate de 2-éthylhexyle avec un rendement de 80 %. L'analyse du polymère par GPC montre les caractéristiques suivantes :

$\overline{M}n = 47500$
$\overline{M}w/\overline{M}n = 1,7$

## EXEMPLE 7

Dans un ballon préalablement séché et sous atmosphère d'azote, on introduit 10,0 x $10^{-3}$ mole de $CH_3(OCH_2CH_2)_3OLi$ en solution dans le THF. On y ajoute 100 ml de toluène et, sous agitation, au goutte à goutte, 1,0 x $10^{-3}$ mole de $(Ph)_2CHLi$ en solution 0,2 molaire dans le THF. On porte le mélange à la température de -78°C au moyen d'un mélange d'acétone et de carboglace, puis on ajoute toujours à -78°C, 0,024 mole d'acrylate de 2-éthylhexyle préalablement agité 48 heures sur hydrure de calcium, distillé puis traité sur fluorényl lithium jusqu'à l'apparition d'une couleur jaune et distillé sur triéthylaluminium immédiatement avant la polymérisation. On arrête la réaction après 30 minutes par addition de 5 ml de méthanol acidifié, puis on chasse le solvant. On obtient un polymère d'acrylate de 2-éthylhexyle avec un rendement de 100 %. L'analyse du polymère par GPC montre les caractéristiques suivantes :

$\overline{M}n = 7500$
$\overline{M}w/\overline{M}n = 1,38$

## EXEMPLE 8

Dans un ballon préalablement séché et sous atmosphère d'azote, on introduit 5,0 x $10^{-3}$ mole de $CH_3(OCH_2CH_2)_2OLi$ en solution dans le THF. On y ajoute 90 ml de toluène et 5 ml de THF préséché et, sous agitation, au goutte à goutte, 0,5 x $10^{-3}$ mole de $(Ph)_2CHLi$ en solution 0,2 molaire dans le THF. On porte le mélange à la température de -30°C au moyen d'un mélange d'acétone et de carboglace, puis on ajoute toujours à -30°C, 0,048 mole d'acrylate de 2-éthylhexyle préalablement agité 48 heures sur hydrure de calcium, distillé puis traité sur fluorényl lithium jusqu'à l'apparition d'une couleur jaune et distillé sur triéthylaluminium immédiatement avant la polymérisation. On arrête la réaction après 15 minutes par addition de 5 ml de méthanol acidifié, puis on chasse le solvant. On obtient un polymère d'acrylate de 2-éthylhexyle avec un rendement de 85 %. L'analyse du polymère par GPC montre les caractéristiques suivantes :

$\overline{M}n = 22000$
$\overline{M}w/\overline{M}n = 2,5$

## EXEMPLE 9

Dans un ballon préalablement séché et sous atmosphère d'azote, on introduit 5,0 x $10^{-3}$ mole de $CH_3(OCH_2CH_2)_2OLi$ en solution dans le THF. On y ajoute 90 ml de toluène et 5 ml de THF préséché et, sous agitation, au goutte à goutte, 0,5 x $10^{-3}$ mole de $(Ph)_2CHLi$ en solution 0,2 molaire dans le THF. On porte le mélange à la température de -78°C au moyen d'un mélange d'acétone et de carboglace, puis on ajoute toujours à -78°C, 0,047 mole de

méthacrylate de méthyle (MMA) préalablement agité 48 heures sur hydrure de calcium et distillé sur triéthylaluminium immédiatement avant la polymérisation. On arrête la réaction après 15 minutes par addition de 5 ml de méthanol acidifié, puis on chasse le solvant. On obtient un polyméthacrylate de méthyle (PMMA) avec un rendement de 100 %. L'analyse du polymère par GPC montre les caractéristiques suivantes :

$\overline{M}n = 7100$
$\overline{M}w/\overline{M}n = 1,04$

Sa microstructure peut être décrite comme suit :

triades syndiotactiques : 80 %
triades hétérotactiques : 18,5 %
triades isotactiques : 0,5 %

La température de transition vitreuse est de 130°C.

**EXEMPLE 10**

Dans un ballon préalablement séché et sous atmosphère d'azote, on introduit 5 x $10^{-3}$ mole de $CH_3(OCH_2CH_2)_2OLi$ en solution dans le THF. On y ajoute 90 ml de toluène préséché et 5 ml de THF préséché et, sous agitation, au goutte à goutte, 0,5 x $10^{-3}$ mole de $(Ph)_2CHLi$ en solution 0,2 molaire dans le THF. On porte le mélange à la température de -78°C au moyen d'un mélange d'acétone et de carboglace, puis on ajoute toujours à -78°C, 0,04 mole d'acrylate de n-butyle (nBuA) préalablement agité 48 heures sur hydrure de calcium, distillé après ajout d'une faible quantité de triéthylaluminium immédiatement avant la polymérisation. On arrête la réaction après 1 minute par addition de 5 ml de méthanol acidifié, puis on chasse le solvant. On précipite le polymère dans du méthanol. On obtient un polymère d'acrylate de n-butyle avec un rendement de 100 %. L'analyse du polymère par GPC montre les caractéristiques suivantes :

$\overline{M}n = 15500$
$\overline{M}w/\overline{M}n = 1,09$

**EXEMPLE 11**

Dans un ballon préalablement séché et sous atmosphère d'azote, on introduit $10^{-2}$ mole de $nBu(OCH_2CH_2)_2OLi$ en solution dans le THF. On y ajoute 125 ml de toluène préséché et, sous agitation, au goutte à goutte $10^{-3}$ mole de $Ph_2CHLi$ en solution 0,2 molaire dans le THF. On porte le mélange à la température de -78°C au moyen d'un mélange d'acétone et de carboglace, puis on ajoute toujours à -78°C, 0,048 mole d'acrylate de 2-éthylhexyle préalablement agité 48 heures sur hydrure de calcium, distillé après ajout d'une faible quantité de triéthylaluminium immédiatement avant la polymérisation. On arrête la réaction après 30 minutes par addition de 5 ml de méthanol acidifié, puis on chasse la moitié du solvant sous vide. On précipite le polymère dans du méthanol. On obtient un polymère d'acrylate de 2-éthylhexyle avec un rendement de 82 %. L'analyse du polymère par GPC montre les caractéristiques suivantes :

$\overline{M}n = 20000$
$\overline{M}w/\overline{M}n = 2,8$

**EXEMPLE 12**

Dans un ballon préalablement séché et sous atmosphère d'azote, on introduit 2,0 x $10^{-3}$ mole de $CH_3(OCH_2CH_2)_2OLi$ en solution dans le THF. On y ajoute 100 ml de toluène préséché et, sous agitation, au goutte à goutte, 0,2 x $10^{-3}$ mole de $Ph_2CHLi$ en solution 0,2 molaire dans le THF. On porte le mélange à la température de -78°C au moyen d'un mélange d'acétone et de carboglace, puis on ajoute toujours à -78°C, 0,5 x $10^{-3}$ mole d'acrylate de t-butyle (tBuA) préalablement agité 48 heures sur hydrure de calcium et distillé après ajout d'une faible quantité de triéthylaluminium immédiatement avant la polymérisation. On arrête la réaction après 10 minutes par addition de 2 ml de méthanol acidifié, puis on précipite le produit dans un excès de méthanol. Après séchage sous vide à 80°C, on obtient un polymère d'acrylate de t-butyle avec un rendement de 100 %. L'analyse du polymère par GPC montre les caractéristiques suivantes :

$\overline{M}n = 16000$
$\overline{M}w/\overline{M}n = 1,16$

**EXEMPLE 13**

Dans un ballon préalablement séché et sous atmosphère d'azote, on introduit $10^{-2}$ mole de $nBu(OCH_2CH_2)_2OLi$ en solution dans le THF. On y ajoute 100 ml de toluène préséché ainsi qu'1 ml d'α-méthylstyrène préalablement distillé sur hydrure de calcium puis sur fluo-rényllithium. On ajoute goutte à goutte et sous agitation $10^{-3}$ mole de s-BuLi en solution dans l'heptane. On porte le mélange à la température de -78°C au moyen d'un mélange d'acétone et de carboglace, puis on ajoute, toujours à -78°C, 0,043 mole de styrène préalablement agité 24 heures sur hydrure de calcium, distillé puis traité sur fluorényllithium jusqu'à l'apparition d'une coloration jaune et redistillé immédiatement avant la polymérisation.

On arrête la réaction après 30 minutes par addition de 5 ml de méthanol acidifié, puis on précipite le polymère dans le méthanol. On obtient un polymère de styrène avec un rendement de 100 %. L'analyse du polymère par GPC montre les caractéristiques suivantes :

$\overline{M}n = 27000$
$\overline{M}w/\overline{M}n = 1,08$

<u>Démonstration du caractère vivant par ajout d'une seconde dose de monomère</u> **: Exemples 14 et 15**

**EXEMPLE 14**

Dans un ballon préalablement séché et sous atmosphère d'azote, on introduit 10,0 x $10^{-3}$ mole de $CH_3(OCH_2CH_2)_2OLi$ en solution dans le THF. On y ajoute 200 ml de toluène préséché et 10 ml de THF préséché, et sous agitation, au goutte à goutte 1,0 x $10^{-3}$ mole de $(Ph)_2CHLi$ en solution 0,2 molaire dans le THF. On porte le mélange à la température de -78°C au moyen d'un mélange d'acétone et de carboglace, puis on ajoute, toujours à -78°C, 0,024 mole d'acrylate de 2-éthylhexyle (2 EtHA) préalablement agité 24 heures sur hydrure de calcium, distillé puis traité sur fluorényllithium jusqu'à l'apparition d'une couleur jaune et redistillé sur triéthylaluminium immédiatement avant la polymérisation. Après 10 minutes de polymérisation, on effectue un prélèvement qui montre les caractéristiques du prépolymère:

$\overline{M}n = 4000$
$\overline{M}w/\overline{M}n = 1,07$

Une seconde dose d'acrylate de 2-éthylhexyle (0,047 mole) est ajoutée. La réaction est arrêtée après 25 minutes par ajout de 5 ml de méthanol acidifié. On obtient un polymère d'acrylate de 2-éthylhexyle avec un rendement de 100 %. L'analyse du polymère par GPC montre les caractéristiques suivantes :

$\overline{M}n = 30000$
$\overline{M}w/\overline{M}n = 1,12$

(La chromatographie d'exclusion montre 13,5 % de désactivation des macroanions P(2EtHA).

**EXEMPLE 15**

Dans un ballon préalablement séché et sous atmosphère d'azote, on introduit 10,0 x $10^{-3}$ mole de $CH_3(OCH_2CH_2)_2OLi$ en solution dans le THF. On y ajoute 200 ml de toluène préséché et 10 ml de THF préséché, et sous agitation, au goutte à goutte 1,0 x $10^{-3}$ mole de $(Ph)_2CHLi$ en solution 0,2 molaire dans le THF. On porte le mélange à la température de -100°C au moyen d'un mélange de THF et d'azote liquide, puis on ajoute, toujours à -100°C, 0,024 mole d'acrylate de 2-éthylhexyle (2 EtHA) préalablement agité 48 heures sur hydrure de calcium, distillé puis traité sur fluorényllithium jusqu'à l'apparition d'une couleur jaune et distillé sur triéthylaluminium immédiatement avant la polymérisation. Après 10 minutes de réaction, on effectue un prélèvement qui montre les caractéristiques du prépolymère:

$\overline{M}n = 4200$
$\overline{M}w/\overline{M}n = 1,16$

Une seconde dose d'acrylate de 2-éthylhexyle (0,047 mole) est ajoutée et la réaction est arrêtée après 1 heure par ajout de 5 ml de méthanol acidifié. On obtient un polymère d'acrylate de 2-éthylhexyle avec un rendement de 100 %. L'analyse du polymère par GPC montre les caractéristiques suivantes :

$\overline{Mn}$ = 16800
$\overline{Mw}/\overline{Mn}$ = 1,16

Dans ces exemples de préparation de macroanions de polymère d'acrylate de 2-éthylhexyle, on peut voir que, à -78°C, on obtient un polymère ayant une masse moléculaire Mn de 30000 et le pourcentage de désactivation du macroanion est de 13,5 %. Lorsque la polymérisation a lieu à -100°C le polymère obtenu a une masse moléculaire Mn de 16800 et le pourcentage de désactivation du macroanion n'est que de 7 %.

**EXEMPLE 16** : **Copolymère biséquencé P(2EtHA-b-MMA)**

Dans un ballon préalablement séché et sous atmosphère d'azote, on introduit $10^{-2}$ mole de $CH_3(OCH_2CH_2)_2OLi$ en solution dans le THF. On y ajoute 150 ml de toluène préséché et sous agitation, au goutte à goutte, $10^{-3}$ mole de $(Ph)_2CHLi$ en solution 0,2 molaire dans le THF. On porte le mélange à la température de -78°C au moyen d'un mélange d'acétone et de carboglace, puis on ajoute, toujours à -78°C, 0,024 mole d'acrylate de 2-éthylhexyle (2-EtHA) préalablement agité 48 heures sur hydrure de calcium, distillé puis traité sur fluorényllithium jusqu'à l'apparition d'une coloration jaune et distillé après ajout d'une faible quantité de triéthylaluminium immédiatement avant la polymérisation.

Après 2 minutes de réaction, on effectue un prélèvement qui montre les caractéristiques de la première séquence :

$\overline{Mn}$ = 4800
$\overline{Mw}/\overline{Mn}$ = 1,05

On ajoute ensuite dans le réacteur 0,11 mole de méthacrylate de méthyle (MMA) préalablement agité 48 heures sur hydrure de calcium et distillé après ajout d'une faible quantité de triéthylaluminium immédiatement avant la réaction.

Après 10 minutes, on arrête la réaction par addition de 2 ml de méthanol acidifié, puis on précipite le produit dans un excès de méthanol. Après séchage sous vide à 80°C, on obtient un copolymère biséquencé avec 100 % de rendement dont l'analyse par chromatographie d'exclusion montre les caractéristiques suivantes :

$\overline{Mn}$ = 16000
$\overline{Mw}/\overline{Mn}$ = 1,06

**EXEMPLE 17** : **Copolymère biséquencé P(MMA-b-2EtHA)**

Dans un ballon préalablement séché et sous atmosphère d'azote, on introduit $10^{-2}$ mole de $CH_3(OCH_2CH_2)_2OLi$ en solution dans le THF. On y ajoute 100 ml de toluène préséché et sous agitation, au goutte à goutte, $10^{-3}$ mole de $(Ph)_2CHLi$ en solution 0,2 molaire dans le THF. On porte le mélange à la température de -78°C au moyen d'un mélange d'acétone et de carboglace, puis on ajoute, toujours à -78°C, 0,046 mole de méthacrylate de méthyle (MMA) préalablement agité 48 heures sur hydrure de calcium, et distillé après ajout d'une faible quantité de triéthylaluminium immédiatement avant la polymérisation.

Après 10 minutes de réaction, on effectue un prélèvement qui montre les caractéristiques de la première séquence :

$\overline{Mn}$ = 7185
$\overline{Mw}/\overline{Mn}$ = 1,06

On ajoute ensuite dans le réacteur 0,1 mole d'acrylate de 2-éthylhexyle (2EtHA) préalablement agité 48 heures sur hydrure de calcium, distillé, puis traité sur fluorényllithium jusqu'à l'apparition d'une couleur jaune, et redistillé après ajout d'une faible quantité de triéthylaluminium immédiatement avant la réaction.

Après 30 minutes, on arrête la réaction par addition de 2 ml de méthanol acidifié, puis on précipite le produit dans un excès de méthanol. Après séchage sous vide à 80°C, on obtient un copolymère biséquencé avec 100 % de rendement dont l'analyse par chromatographie d'exclusion montre les caractéristiques suivantes :

$\overline{Mn}$ = 21000
$\overline{Mw}/\overline{Mn}$ = 1,06

On a noté que la polymérisation, dans cet exemple, est bien contrôlée et on n'observe pas d'homopolymère de méthacrylate de méthyle résiduel.

**EXEMPLE 18: Copolymère biséquencé P(St-b-2EtHA)**

Dans un ballon préalablement séché et sous atmosphère d'azote, on introduit $10^{-2}$ mole de $CH_3(OCH_2CH_2)_2OLi$ en solution dans le THF. On y ajoute 150 ml de toluène préséché ainsi qu'1 ml d'α-méthylstyrène préalablement distillé sur hydrure de calcium puis sur fluorényllithium.

On ajoute au goutte à goutte et sous agitation, 4,5 ml ($10^{-3}$ mole) de s-BuLi en solution dans l'heptane. On porte le mélange à la température de -78°C au moyen d'un mélange d'acétone et de carboglace, puis on ajoute, toujours à -78°C, 5 ml (0,043 mole) de styrène préalablement agité 24 heures sur hydrure de calcium, distillé puis traité sur fluorényllithium jusqu'à l'apparition d'une coloration jaune et redistillé immédiatement avant la polymérisation.

Après 30 minutes de réaction, on effectue un prélèvement qui montre les caractéristiques de la séquence polystyrène :

$\overline{M}n = 5000$
$\overline{M}w/\overline{M}n = 1,12$

On ajoute ensuite dans le réacteur 0,048 mole d'acrylate de 2-éthylhexyle (2EtHA) préalablement agité 48 heures sur hydrure de calcium distillé, puis traité sur fluorényllithium jusqu'à l'apparition d'une coloration jaune et redistillé après ajout d'une faible quantité de triéthylaluminium immédiatement avant la réaction.

Après 60 minutes, on arrête la réaction par addition de 2 ml de méthanol acidifié, puis on précipite le produit dans un excès de méthanol. Après séchage sous vide à 80°C, on obtient un copolymère biséquencé avec 100 % de rendement dont l'analyse par chromatographie d'exclusion montre les caractéristiques suivantes :

$\overline{M}n = 15000$
$\overline{M}w/\overline{M}n = 1,22$

**EXEMPLE 19 : Copolymère biséquencé P(St-b-2EtHA)**

Dans un ballon préalablement séché et sous atmosphère d'azote, on introduit $10^{-2}$ mole de $Et(OCH_2CH_2)_2OLi$ en solution dans le THF. On y ajoute 150 ml de toluène préséché ainsi qu'1 ml d'α-méthylstyrène préalablement distillé sur hydrure de calcium puis sur fluorényllithium. On ajoute au goutte à goutte et sous agitation, 3,2 ml ($10^{-3}$ mole) de s-BuLi en solution dans l'heptane. On porte le mélange à la température de -78°C au moyen d'un mélange d'acétone et de carboglace, puis on ajoute, toujours à -78°C, 5 ml (0,043 mole) de styrène préalablement agité 24 heures sur hydrure de calcium, distillé puis traité sur fluorényllithium jusqu'à l'apparition d'une coloration jaune et redistillé immédiatement avant la polymérisation.

Après 30 minutes de réaction, on effectue un prélèvement qui montre les caractéristiques de la séquence polystyrène :

$\overline{M}n = 21000$
$\overline{M}w/\overline{M}n = 1,07$

On ajoute ensuite dans le réacteur 0,048 mole d'acrylate de 2-éthylhexyle (2EtHA) préalablement agité 48 heures sur hydrure de calcium, distillé, puis traité sur fluorényllithium jusqu'à l'apparition d'une coloration jaune et redistillé après ajout d'une faible quantité de triéthylaluminium immédiatement avant la réaction.

Après 60 minutes, on arrête la réaction par addition de 2 ml de méthanol acidifié, puis on précipite le produit dans un excès de méthanol. Après séchage sous vide à 80°C, on obtient un copolymère biséquencé avec 100 % de rendement dont l'analyse par chromatographie d'exclusion montre les caractéristiques suivantes :

$\overline{M}n = 33600$
$\overline{M}w/\overline{M}n = 1,40$

**EXEMPLE 20 : Copolymère biséquencé P(St-b-nBuA)**

Dans un ballon préalablement séché et sous atmosphère d'azote, on introduit $10^{-2}$ mole de $CH_3(OCH_2CH_2)_2OLi$ en solution dans le THF. On y ajoute 150 ml de toluène préséché ainsi qu'1 ml d'α-méthylstyrène préalablement distillé sur hydrure de calcium puis sur fluorényllithium. On ajoute au goutte à goutte et sous agitation, 3,2 ml ($10^{-3}$ mole) de s-BuLi en solution dans l'heptane. On porte le mélange à la température de -78°C au moyen d'un mélange d'acétone et de carboglace, puis on ajoute, toujours à -78°C, 5 ml (0,043 mole) de styrène préalablement agité 24 heures sur hydrure de calcium, distillé puis traité sur fluorényllithium jusqu'à l'apparition d'une coloration jaune et redistillé immédiatement avant la polymérisation.

Après 25 minutes de réaction, on effectue un prélèvement qui montre les caractéristiques de la séquence polystyrène :

$\overline{M}n$ = 18300
$\overline{M}w/\overline{M}n$ = 1,14

On ajoute ensuite dans le réacteur 10 ml (0,069 mole) d'acrylate de n-butyle préalablement agité 48 heures sur hydrure de calcium, distillé, puis traité sur fluorényllithium jusqu'à l'apparition d'une coloration jaune et redistillé après ajout d'une faible quantité de triéthylaluminium immédiatement avant la réaction.

Après 60 minutes, on arrête la réaction par addition de 2 ml de méthanol acidifié, puis on précipite le produit dans un excès de méthanol. Après séchage sous vide à 80°C, on obtient un copolymère biséquencé avec 100 % de rendement dont l'analyse par chromatographie d'exclusion montre les caractéristiques suivantes :

$\overline{M}n$ = 38000
$\overline{M}w/\overline{M}n$ = 1,45

**EXEMPLE 21 : Copolymère biséquencé P(MMA-b-nBuA)**

Dans un ballon préalablement séché et sous atmosphère d'azote, on introduit $10^{-2}$ mole de $CH_3(OCH_2CH_2)_2OLi$ en solution dans le THF. On y ajoute 200 ml de toluène et sous agitation, au goutte à goutte, 5 ml ($10^{-3}$ mole) de $Ph_2CHLi$ en solution 0,2 M dans le THF. On porte le mélange à la température de -78°C au moyen d'un mélange d'acétone et de carboglace, puis on ajoute, toujours à -78°C, 5 ml (0,047 mole) de méthacrylate de méthyle (MMA) préalablement agité 48 heures sur hydrure de calcium, distillé et redistillé après ajout d'une faible quantité de triéthylaluminium immédiatement avant la polymérisation.

Après 10 minutes de réaction, on effectue un prélèvement qui montre les caractéristiques de la première séquence :

$\overline{M}n$ = 5200
$\overline{M}w/\overline{M}n$ = 1,03

On ajoute ensuite dans le réacteur 10 ml (0,069 mole) d'acrylate de n-butyle préalablement agité 48 heures sur hydrure de calcium, distillé, puis traité sur fluorényllithium jusqu'à l'apparition d'une coloration jaune et distillé et redistillé après ajout d'une faible quantité de triéthylaluminium immédiatement avant la réaction.

Après 60 minutes, on arrête la réaction par addition de 2 ml de méthanol acidifié, puis on précipite le produit dans un excès de méthanol. Après séchage sous vide à 80°C, on obtient un copolymère biséquencé avec 100 % de rendement dont l'analyse par chromatographie d'exclusion montre les caractéristiques suivantes :

$\overline{M}n$ = 20600
$\overline{M}w/\overline{M}n$ = 1,31

D'après les exemples 16 à 21, on peut constater que l'on obtient, avec le système d'amorçage selon l'invention, des copolymères biséquencés de faible polydispersité, allant de 1,04 à 1,45. Ces copolymères sont obtenus avec des rendements élevés, supérieurs à 80 %. On peut aussi noter que l'on a préparé des copolymères à séquences acrylate d'alkyle primaire-méthacrylate (exemple 16), copolymères que l'on ne pouvait obtenir avec un système d'amorçage tel que décrit dans le brevet EP-A-402 219.

En outre, on a pu noter que, dans les exemples 17 et 21 qui concernent la préparation de copolymère biséquencé P (MMA-b-2EtHA) et P(MMA-b-nBuA), la polymérisation était bien contrôlée et que l'on n'observait pas d'homopolymère de méthacrylate de méthyle résiduel. Ceci est important car, avec des systèmes d'amorçage tels que décrits dans le brevet EP-A-402 219, on obtient généralement 20 % d'homopolymère de méthacrylate de méthyle.

**EXEMPLE 22 : Copolymère triséquencé P2EtHA-b-PMMA-b-P2EtHA**

Dans un ballon préalablement séché et sous atmosphère d'azote, on introduit $10^{-2}$ mole de $CH_3(OCH_2CH_2)_2OLi$ en solution dans le THF. On y ajoute 200 ml de toluène préséché ainsi qu'1 ml d'α-méthylstyrène préalablement distillé sur hydrure de calcium puis traité sur fluorényllithium. On ajoute au goutte à goutte et sous agitation, 5 ml ($10^{-3}$ mole) de naphthalène lithium en solution 0,2 M dans le THF. On porte le mélange à la température de -78°C au moyen d'un mélange d'acétone et de carboglace, puis on ajoute, toujours à -78°C, 2,5 ml (0,023 mole) de MMA préalablement agité 24 heures sur hydrure de calcium et redistillé après ajout d'une faible quantité de triéthylaluminium immédiatement avant la polymérisation.

Après 15 minutes de réaction, on effectue un prélèvement qui montre les caractéristiques de la séquence PMMA :

$\overline{M}n = 4000$
$\overline{M}w/\overline{M}n = 1,08$

On ajoute ensuite dans le réacteur 0,048 mole d'acrylate de 2-éthylhexyle préalablement agité 48 heures sur hydrure de calcium, distillé, puis traité sur fluorényllithium jusqu'à l'apparition d'une coloration jaune et redistillé après ajout d'une faible quantité de triéthylaluminium immédiatement avant la réaction.

Après 30 minutes de réaction, on arrête la réaction par addition de 2 ml de méthanol acidifié, puis on précipite le produit dans un excès de méthanol. Après séchage sous vide à 80°C, on obtient un copolymère triséquencé avec 100 % de rendement dont l'analyse par chromatographie d'exclusion montre les caractéristiques suivantes :

$\overline{M}n = 18500$
$\overline{M}w/\overline{M}n = 1,15$

On obtient un copolymère de polydispersité faible et sans homopolymère de méthacrylate de méthyle.

**EXEMPLE 23 : Copolymère triséquencé PMMA-P2EtHA-PMMA**

Dans un ballon préalablement séché et sous atmosphère d'azote, on introduit $10^{-2}$ mole de $CH_3(OCH_2CH_2)_2OLi$ en solution dans le THF. On y ajoute 200 ml de toluène préséché ainsi qu'0,5 ml de diphényléthylène préalablement distillé en présence de s-Buli. On ajoute au goutte à goutte et sous agitation, 5 ml ($10^{-3}$ mole) de naphthalène lithium en solution 0,2 M dans le THF. On porte le mélange à la température de -100°C au moyen d'un mélange de THF et d'azote liquide, puis on ajoute, toujours à -100°C, 5 ml (0,023 mole) d'acrylate de 2-éthylhexyle (2EtHA) préalablement agité 24 heures sur hydrure de calcium, distillé puis traité sur fluorényllithium jusqu'à l'apparition d'une coloration jaune et redistillé après ajout d'une faible quantité de triéthylaluminium immédiatement avant la polymérisation.

Après 2 minutes de réaction, on effectue un prélèvement qui montre les caractéristiques de la séquence P2EtHA :

$\overline{M}n = 10900$
$\overline{M}w/\overline{M}n = 1,20$

On ajoute ensuite dans le réacteur 0,1 mole de méthacrylate de méthyle préalablement agité 48 heures sur hydrure de calcium, distillé et redistillé après ajout d'une faible quantité de triéthylaluminium immédiatement avant la réaction.

Après 30 minutes, on arrête la réaction par addition de 2 ml de méthanol acidifié, puis on précipite le produit dans un excès de méthanol. Après séchage sous vide à 80°C, on obtient un copolymère triséquencé avec 100 % de rendement dont l'analyse par chromatographie d'exclusion montre les caractéristiques suivantes :

$\overline{M}n = 32000$
$\overline{M}w/\overline{M}n = 1,21$

On obtient, dans cet exemple, un copolymère avec un rendement excellent et exempt d'homopolymère d'acrylate de 2-éthylhexyle.

**EXEMPLE 24 : Copolymère triséquencé PMMA-PnBuA-PMMA**

Dans un ballon préalablement séché et sous atmosphère d'azote, on introduit $10^{-2}$ mole de $CH_3(OCH_2CH_2)_2OLi$ en solution dans le THF. On y ajoute 200 ml de toluène préséché ainsi qu'1 ml d'$\alpha$-méthylstyrène préalablement distillé sur hydrure de calcium, puis sur fluorényllithium. On ajoute au goutte à goutte et sous agitation, 5 ml ($10^{-3}$ mole) de naphthalène lithium en solution 0,2 M dans le THF. On porte le mélange à la température de -78°C au moyen d'un mélange d'acétone et de carboglace, puis on ajoute, toujours à -78°C, 5 ml (0,035 mole) de d'acrylate de n-butyle préalablement agité 24 heures sur hydrure de calcium, distillé puis traité sur fluorényllithium jusqu'à l'apparition d'une coloration jaune et redistillé après ajout d'une faible quantité de triéthylaluminium immédiatement avant la polymérisation.

Après 5 minutes de réaction, on effectue un prélèvement qui montre les caractéristiques de la séquence PnBuA :

$\overline{M}n = 4500$
$\overline{M}w/\overline{M}n = 1,21$

On ajoute ensuite dans le réacteur 0,1 mole de méthacrylate de méthyle (MMA) préalablement agité 48 heures sur

hydrure de calcium, distillé et redistillé après ajout d'une faible quantité de triéthylaluminium immédiatement avant la réaction.

Après 30 minutes, on arrête la réaction par addition de 2 ml de méthanol acidifié, puis on précipite le produit dans un excès de méthanol. Après séchage sous vide à 80°C, on obtient un copolymère triséquencé avec 80 % de rendement dont l'analyse par chromatographie d'exclusion montre les caractéristiques suivantes :

$\overline{M}n$ = 83500
$\overline{M}w/\overline{M}n$ = 1,09

**EXEMPLE 25 : Copolymère étoilé (PMMA-b-P2EtHA)n**

Dans un ballon préalablement séché et sous atmosphère d'azote, on introduit $10^{-2}$ mole de $CH_3(OCH_2CH_2)_2OLi$ en solution dans le THF. On y ajoute 150 ml de toluène et, sous agitation, au goutte à goutte $10^{-3}$ mole de $Ph_2CHLi$ en solution 0,2 M dans le THF. On porte le mélange à la température de -100°C au moyen d'un mélange de THF et d'azote liquide, puis on ajoute, toujours à -100°C, 0,047 mole de méthacrylate de méthyle (MMA) préalablement agité 48 heures sur hydrure de calcium, distillé et redistillé après ajout d'une faible quantité de triéthylaluminium immédiatement avant la polymérisation.

Après 10 minutes de réaction, on effectue un prélèvement qui montre les caractéristiques de la première séquence :

$\overline{M}n$ = 4800
$\overline{M}w/\overline{M}n$ = 1,06

On ajoute ensuite dans le réacteur 0,024 mole d'acrylate de 2-éthylhexyle (2EtHA) préalablement agité 48 heures sur hydrure de calcium, distillé puis traité sur fluorényllithium jusqu'à l'apparition d'une coloration jaune et redistillé après ajout d'une faible quantité de triéthylaluminium immédiatement avant la réaction.

Après 10 minutes de réaction, on effectue un prélèvement qui montre les caractéristiques du copolymère biséquencé :

$\overline{M}n$ = 10500
$\overline{M}w/\overline{M}n$ = 1,11

On ajoute ensuite $10^{-2}$ mole de diméthacrylate d'éthylèneglycol (DIMAEG) et on arrête la réaction après 60 minutes par addition de 2 ml de méthanol acidifié, puis on précipite le produit dans un excès de méthanol. Après séchage sous vide à 80°C, on obtient un copolymère biséquencé étoilé avec 100 % de rendement dont l'analyse par chromatographie d'exclusion montre les caractéristiques suivantes :

$\overline{M}n$ = 86000
$\overline{M}w/\overline{M}n$ = 1,27

Le taux de couplage est de 80 %.

**EXEMPLE 26 : Copolymère étoilé (P2EtHA)nX**

Dans un ballon préalablement séché et sous atmosphère d'azote, on introduit $10^{-2}$ mole de $CH_3(OCH_2CH_2)_2OLi$ en solution dans le THF. On y ajoute 150 ml de toluène et, sous agitation, au goutte à goutte $10^{-3}$ mole de $Ph_2CHLi$ en solution 0,2 M dans le THF. On porte le mélange à la température de -100°C au moyen d'un mélange de THF et d'azote liquide, puis on ajoute, toujours à -100°C, 0,029 mole d'acrylate de 2-éthylhexyle (2EtHA) préalablement agité 48 heures sur hydrure de calcium, distillé puis traité sur fluorényllithium jusqu'à l'apparition d'une coloration jaune et redistillé après ajout d'une faible quantité de triéthylaluminium immédiatement avant la polymérisation.

Après 10 minutes de réaction, on effectue un prélèvement qui montre les caractéristiques de la première séquence :

$\overline{M}n$ = 5200
$\overline{M}w/\overline{M}n$ = 1,08

On ajoute ensuite $10^{-3}$ mole de diméthacrylate d'éthylèneglycol (DIMAEG) et on arrête la réaction après 60 minutes par addition de 2 ml de méthanol acidifié, puis on précipite le produit dans un excès de méthanol. Après séchage sous vide à 80°C, on obtient un copolymère triséquencé étoilé avec 100 % de rendement dont l'analyse par chromatographie d'exclusion montre les caractéristiques suivantes :

$\overline{M}n = 49000$
$\overline{M}w/\overline{M}n = 1{,}39$

Le taux de couplage est de 88 %.

**Revendications**

1. Procédé pour la polymérisation de monomères (meth)acryliques et éventuellement de comonomères vinyliques non acryliques consistant à polymériser le(s) monomère(s) en présence d'un système d'amorçage comprenant (1) au moins un amorceur et (2) un alcoolate de métal alcalin, caractérisé en ce que l'alcoolate de métal alcalin a la formule R'OM' dans laquelle M' est un métal alcalin et R' a la formule :

$$R^1(OR^2)_m$$

dans laquelle $R^1$ est un radical alkyle linéaire ou ramifié ayant de 1 à 6 atomes de carbone ou un radical arylalkyle, $R^2$ est un radical alkylène linéaire ou ramifié ayant de 2 à 4 atomes de carbone et m est le nombre entier, 1, 2 ou 3.

2. Procédé selon la revendication 1, caractérisé en ce que l'amorceur est monofonctionnel et choisi parmi les composés de formule :

$$(R)_p\text{-}M$$

dans laquelle :

- M désigne un métal alcalin ou alcalino-terreux (valence p de 1 ou 2) et
- R désigne un radical alkyle à chaîne droite ou ramifiée contenant 2 à 6 atomes de carbone, ou un radical aryle, éventuellement substitué, ou un radical alkyle contenant 1 à 6 atomes de carbone substitué par au moins un groupe phényle.

3. Procédé selon la revendication 2, caractérisé en ce que l'amorceur monofonctionnel est choisi parmi le n-butyllithium, le sec-butyllithium, l'alphaméthylstyryllithium, le 1,1-diphénylhexyllithium, le diphénylméthyllithium, diphénylméthylsodium ou diphénylméthylpotassium et le 1,1-diphényl-3-méthylpentyllithium.

4. Procédé selon la revendication 1, caractérisé en ce que l'amorceur est bifonctionnel et choisi parmi les composés 1,1,4,4-tétraphényl-1,4-dilithio-butane (TPDLB), le 1,1,4,4-tétraphényl-1,4-disodiobutane, le naphtalényllithium, le naphtalénylsodium, le naphtalénylpotassium et leurs homologues.

5. Procédé selon la revendication 1, caractérisé en ce que le rapport molaire alcoolate/amorceur est compris entre 1 et 50.

6. Procédé selon l'une des revendications 1 à 5, caractérisé en ce que la polymérisation a lieu à une température comprise entre - 100C° et + 60°C.

7. Procédé conforme à la revendication 6 caractérisé en ce qu'on polymérise du méthacrylate de méthyle en présence d'un solvant apolaire.

8. Procédé de formation de copolymère biséquencé de structure A-B dans laquelle A et B représentent une séquence de monomère acrylique, de monomère méthacrylique ou vinylique non acrylique, au moins A ou B étant une séquence acrylique selon lequel, dans une première étape, on conduit la polymérisation anionique d'un monomère A en présence du système d'amorçage défini à l'une des revendications 1 à 5 pour obtenir un chaînon vivant $A^-$ de la séquence polymère A et, dans une seconde étape, on fait réagir le chaînon vivant $A^-$avec un monomère B en présence d'un système d'amorçage de la première étape.

9. Procédé conforme à la revendication 8, dans lequel A et B représentent une séquence de monomère acrylate d'alkyle primaire, secondaire ou tertiaire ou méthacrylate d'alkyle.

10. Procédé de fabrication de copolymère triséquencé de structure A-B-C dans laquelle les blocs A, B et C représentent une séquence de monomères acryliques, méthacryliques ou vinyliques non-acryliques au moins une des séquence étant une séquence acrylique et, au moins un des blocs A et C étant différent du bloc B, selon lequel on conduit, dans une première étape, une polymérisation anionique d'au moins un monomère A en présence du système d'amorçage conforme à l'une des revendications 1 à 5, pour obtenir un chaînon vivant $A^-$, puis, dans une deuxième étape, on fait réagir ledit chaînon vivant avec au moins un monomère B pour obtenir un copolymère biséquencé vivant $(A\text{-}B)^-$, puis dans une troisième étape, on fait réagir ledit copolymère $(A\text{-}B)^-$ avec au moins un copolymère C pour former un copolymère triséquencé vivant $(A\text{-}B\text{-}C)^-$ et, dans une quatrième étape, on fait réagir le copolymère $(A\text{-}B\text{-}C)^-$ avec au moins un composé protolytique.

**11.** Procédé conforme à la revendication 10, dans lequel on forme un copolymère triséquencé de formule A-B-A, A et B étant des séquences de monomères acrylate d'alkyle primaire, secondaire ou tertiaire ou de monomères méthacryliques ou vinyliques non acryliques.

**12.** Procédé de fabrication de copolymère triséquencé de formule A-B-A, A et B étant des séquences de monomères acrylate d'alkyle primaire, secondaire ou tertiaire ou de monomères méthacryliques ou vinyliques non acryliques au moins une des séquences étant une séquence acrylique, dans lequel on forme une polymérisation anionique d'au moins un monomère B en présence d'un système d'amorçage selon l'une des revendications 1, 4 ou 5, dans lequel l'amorceur est un amorceur bifonctionnel pour obtenir un chaînon vivant $^-B^-$, puis on fait réagir ledit chaînon vivant avec au moins un monomère A pour former un copolymère triséquencé vivant $^-(A\text{-}B\text{-}A)^-$ et on fait réagir ce copolymère $^-(A\text{-}B\text{-}A)^-$ obtenu avec au moins un composé protolytique.

**13.** Procédé de fabrication d'un copolymère séquencé en étoile de formule :

$$\left[\begin{array}{c}(PA\text{-}PB\text{-}PC)_n\\ \\(PD\text{-}PE)_m\end{array}\right] X \qquad (I)$$

dans laquelle,
ou bien :

- PA représente une séquence polymère issue d'au moins un monomère A choisi parmi les monomères vinyliques non-acryliques et méthacryliques ;
- PB représente une séquence polymère issue d'au moins un monomère acrylique B ; et
- PC est éventuellement présent, auquel cas il représente une séquence polymère issue d'au moins un monomère C méthacrylique ;

ou bien :

- PA et PC représentent chacun une séquence polymère issue d'un même monomère acrylique ; et
- PB représente une séquence polymère issue d'au moins un monomère B choisi parmi les monomères méthacryliques ;
- PD représente une séquence polymère issue d'au moins un monomère D choisi parmi les monomères vinyliques non-acryliques et méthacryliques, et simultanément PE représente une séquence polymère issue d'au moins un monomère acrylique E ;

ou bien PD représente une séquence polymère issue d'au moins un monomère acrylique D, et simultanément PE représente une séquence polymère issue d'au moins un monomère méthacrylique E ;

- n représente le nombre de branches de (PA-PB-PC) et est compris entre 2 et 50 inclus, et m représente le nombre de branches de (PD-PE) et est compris entre 0 et 18 inclus, à la condition que la somme n+m ne dépasse pas la valeur de 50 ;
- chacune des branches (PA-PB-PC) et (PD-PE) pouvant par ailleurs ne comporter qu'une seule séquence polymère, auquel cas les deux séquences sont différentes, l'une étant d'un monomère acrylique, et l'autre d'un monomère choisi parmi les monomères vinyliques non-acryliques et méthacryliques ; et
- X représente un nodule réticulé d'au moins un monomère Mr polymérisé, ledit monomère Mr étant constitué

par un agent de réticulation multifonctionnel présentant au moins deux doubles liaisons polymérisables par molécule,

procédé selon lequel :

**(1)** on conduit la polymérisation anionique d'au moins un monomère A, à l'aide du système d'amorçage conforme à l'une des revendications 1 à 5, pour obtenir un chaînon vivant de la séquence de polymère $PA^-$ ; puis
**(2)** on fait réagir ledit chaînon vivant ainsi obtenu avec au moins un monomère B, pour obtenir le copolymère biséquencé vivant $(PA\text{-}PB)^-$, puis
**(3)** on fait réagir ledit copolymère biséquencé vivant ainsi obtenu avec au moins un monomère C, pour obtenir le copolymère triséquencé vivant $(PA\text{-}PB\text{-}PC)^-$ ; l'étape (3) pouvant être omise et le procédé pouvant être commencé en conduisant l'étape (1) avec le monomère B, ou bien l'on ne peut former qu'une séquence vivant $PA^-$ ou $PB^-$ ou $PC^-$ ;
**(4)** le cas échéant, on forme un copolymère biséquencé vivant $(PD\text{-}PE)^-$ en procédant comme en (1) et (2), mais en partant d'au moins un monomère D et d'au moins un monomère E ; ou bien on forme une séquence vivante $PD^-$ ou $PE^-$ en conduisant l'étape (1) avec les monomères D ou E ;
**(5)** on fait réagir le copolymère vivant $(PA\text{-}PB\text{-}PC)^-$ ou $(PA\text{-}PB)^-$ ou $(PB\text{-}PC)^-$ ou la séquence vivante $PA^-$ ou $PB^-$ ou $PC^-$, le cas échéant en mélange avec le copolymère biséquencé vivant $(PD\text{-}PE)^-$ ou la séquence vivante $PD^-$ ou $PE^-$ obtenu selon (4), dans le milieu qui a servi à conduire leur polymérisation par voie anionique, avec au moins un monomère Mr en excès molaire de 4 à 26 par centre actif, et on désactive les doubles liaisons par une réaction avec une source de protons consistant notamment en un alcool, de l'eau ou un acide protonique, et
**(6)** le cas échéant, on conduit une transestérification en milieu acide du copolymère en étoile obtenu.

**14.** Procédé conforme à la revendication 13, dans lequel on forme un copolymère séquencé en étoile de formule $(PA\text{-}PB)_nX$ dans laquelle PA et PB, identiques ou différents, représentent des séquences polymères issues de monomères acrylate d'alkyle primaire, secondaire ou tertiaire ou de monomère méthacryliques ou vinyliques non-acryliques, l'une au moins des séquences étant une séquence acrylique, et n est égal à un nombre entier compris entre 2 et 50.

**15.** Copolymère biséquencé obtenu par le procédé selon la revendication 8, de structure A-B dans laquelle A représente une séquence de monomère acrylate d'alkyle primaire et B représente une séquence de monomère méthacrylique, d'acrylate d'alkyle primaire, secondaire ou tertiaire, la masse moléculaire moyenne en nombre du copolymère étant comprise entre 5000 et 500 000 et l'indice de polydispersité étant inférieur ou égal à 1,2.

## Claims

**1.** Process for the polymerization of (meth)acrylic monomers and optionally of nonacrylic vinyl comonomers, consisting in polymerizing the monomer(s) in the presence of an initiation system comprising (1) at least one initiator and (2) an alkali metal alcoholate, characterized in that the alkali metal alcoholate has the formula R'OM' in which M' is an alkali metal and R' has the formula:

$$R^1(OR^2)_m$$

in which $R^1$ is a linear or branched alkyl radical containing from 1 to 6 carbon atoms or an arylalkyl radical, $R^2$ is a linear or branched alkylene radical containing from 2 to 4 carbon atoms, and m is the integer, 1, 2 or 3.

**2.** Process according to Claim 1, characterized in that the initiator is monofunctional and chosen from the compounds of formula:

$$(R)_p\text{-}M$$

in which:

- M denotes an alkali or alkaline-earth metal (valency p of 1 or 2); and
- R denotes an alkyl radical with a straight or branched chain containing 2 to 6 carbon atoms, or an aryl radical, optionally substituted, or an alkyl radical containing 1 to 6 carbon atoms, substituted by at least one phenyl group.

3. Process according to Claim 2, characterized in that the monofunctional initiator is chosen from n-butyllithium, sec-butyllithium, alpha-methylstyryllithium, 1,1-diphenylhexyllithium, diphenylmethyllithium, diphenylmethylsodium or diphenylmethylpotassium and 1,1-diphenyl-3-methylpentyllithium.

4. Process according to Claim 1, characterized in that the initiator is difunctional and chosen from the compounds 1,1,4,4-tetraphenyl-1,4-dilithiobutane (TPDLB), 1,1,4,4-tetraphenyl-1,4-disodiobutane, naphthalenyllithium, naphthalenylsodium, naphthalenylpotassium and their homologues.

5. Process according to Claim 1, characterized in that the alcoholate/initiator molar ratio is between 1 and 50.

6. Process according to one of Claims 1 to 5, characterized in that the polymerization takes place at a temperature of between -100°C and +60°C.

7. Process in accordance with Claim 6, characterized in that methyl methacrylate is polymerized in the presence of a nonpolar solvent.

8. Process for forming a diblock copolymer of structure A-B in which A and B denote a block of acrylic monomer or of methacrylic or nonacrylic vinyl monomer, at least A or B being an acrylic block, according to which, in a first stage, the anionic polymerization of a monomer A is conducted in the presence of the initiation system defined in one of Claims 1 to 5 to obtain a living chain unit $A^-$ of the polymer block A then, in a second stage, the living chain unit $A^-$ is reacted with a monomer B in the presence of an initiation system from the first stage.

9. Process in accordance with Claim 8, in which A and B denote a block of primary, secondary or tertiary alkyl acrylate monomer or alkyl methacrylate.

10. Process for the manufacture of a triblock copolymer of structure A-B-C in which the blocks A, B and C denote a block of acrylic, methacrylic or nonacrylic vinyl monomers, at least one of the blocks being an acrylic block, and at least one of the blocks A and C being other than block B, according to which, in a first stage, an anionic polymerization of at least one monomer A is conducted in the presence of the initiation system in accordance with one of Claims 1 to 5, to obtain a living chain unit $A^-$, then, in a second stage, the said living chain unit is reacted with at least one monomer B to obtain a living diblock copolymer $(A\text{-}B)^-$, then in a third stage the said copolymer $(A\text{-}B)^-$ is reacted with at least one copolymer C to form a living triblock copolymer $(A\text{-}B\text{-}C)^-$ and, in a fourth stage, the copolymer $(A\text{-}B\text{-}C)^-$ is reacted with at least one protolytic compound.

11. Process in accordance with Claim 10, in which a triblock copolymer of formula A-B-A is formed, A and B being blocks of primary, secondary or tertiary alkyl acrylate monomers or of methacrylic or nonacrylic vinyl monomers.

12. Process for the manufacture of a triblock copolymer of formula A-B-A, A and B being blocks of primary, secondary or tertiary alkyl acrylate monomers or of methacrylic or nonacrylic vinyl monomers, at least one of the blocks being an acrylic block, in which anionic polymerization of at least one monomer B is formed in the presence of an initiation system according to one of Claims 1, 4 and 5, in which the initiator is a difunctional initiator to obtain a living chain unit $^-B^-$, then the said living chain unit is reacted with at least one monomer A to form a living triblock copolymer $^-(A\text{-}B\text{-}A)^-$ and this copolymer $^-(A\text{-}B\text{-}A)^-$ which is obtained is reacted with at least one protolytic compound.

13. Process for the manufacture of a star-shaped block copolymer of formula:

$$\left[\begin{array}{c}(PA\text{-}PB\text{-}PC)_n \\ \\ (PD\text{-}PE)_m\end{array}\right] X \qquad (I)$$

in which,
either:

- PA denotes a polymer block originating from at least one monomer A chosen from nonacrylic vinyl and methacrylic monomers;

- PB denotes a polymer block originating from at least one acrylic monomer B; and
- PC is optionally present, in which case it denotes a polymer block originating from at least one methacrylic monomer C; or:
- PA and PC each denote a polymer block originating from the same acrylic monomer; and
- PB denotes a polymer block originating from at least one monomer B chosen from methacrylic monomers;
- PD denotes a polymer block originating from at least one monomer D chosen from nonacrylic vinyl and methacrylic monomers, and simultaneously PE denotes a polymer block originating from at least one acrylic monomer E; or else PD denotes a polymer block originating from at least one acrylic monomer D, and simultaneously PE denotes a polymer block originating from at least one methacrylic monomer E;
- n denotes the number of branches of (PA-PB-PC) and is between 2 and 50 inclusive, and m denotes the number of branches of (PD-PE) and is between 0 and 18 inclusive, on condition that the sum n+m does not exceed the value of 50;
- it being possible for each of the branches (PA-PB-PC) and (PD-PE) furthermore to comprise only a single polymer block, in which case the two blocks are different, one being of an acrylic monomer and the other of a monomer chosen from nonacrylic vinyl and methacrylic monomers; and
- X denotes a crosslinked nodule of at least one polymerized monomer Mr, the said monomer Mr consisting of a multifunctional crosslinking agent containing at least two polymerizable double bonds per molecule,

process according to which:

(1) the anionic polymerization of at least one monomer A is conducted with the aid of the initiation system according to one of Claims 1 to 5, to obtain a living chain unit of the polymer block $PA^-$; then
(2) the said living chain unit thus obtained is reacted with at least one monomer B in order to obtain the living diblock copolymer $(PA\text{-}PB)^-$, then
(3) the said living diblock copolymer thus obtained is reacted with at least one monomer C in order to obtain the living triblock copolymer $(PA\text{-}PB\text{-}PC)^-$; it being possible for stage (3) to be omitted and for the process to be started by conducting stage (1) with the monomer B, or else it is possible to form only one living block $PA^-$ or $PB^-$ or $PC^-$;
(4) if appropriate, a living diblock copolymer $(PD\text{-}PE)^-$ is formed by proceeding as in (1) and (2), but starting with at least one monomer D and at least one monomer E; or else a living block $PD^-$ or $PE^-$ is formed by conducting stage (1) with the monomers D or E;
(5) the living copolymer $(PA\text{-}PB\text{-}PC)^-$ or $(PA\text{-}PB)^-$or $(PB\text{-}PC)^-$ or the living block $PA^-$ or $PB^-$ or $PC^-$ is reacted, mixed, if appropriate, with the living diblock copolymer $(PD\text{-}PE)^-$ or the living block $PD^-$ or $PE^-$ obtained according to (4), in the medium which was used to conduct their polymerization by an anionic route, with at least one monomer Mr in a molar excess of 4 to 26 per active centre, and the double bonds are deactivated by a reaction with a proton source consisting especially of an alcohol, of water or a protonic acid, and
(6) if appropriate, a transesterification of the star-shaped copolymer obtained is conducted in an acidic medium.

**14.** Process according to Claim 13, in which a star-shaped block copolymer of formula $(PA\text{-}PB)_nX$ is formed, in which PA and PB, which are identical or different, denote polymer blocks originating from primary, secondary or tertiary alkyl acrylate monomers or from methacrylic or nonacrylic vinyl monomers, at least one of the blocks being an acrylic block, and n is equal to an integer between 2 and 50.

**15.** Diblock copolymer obtained by the process according to Claim 8, of A-B structure in which A denotes a primary alkyl acrylate monomer block and B denotes a block of methacrylic monomer or of primary, secondary or tertiary alkyl acrylate, the number-average molecular mass of the copolymer being between 5000 and 500 000 and the polydispersity value being lower than or equal to 1.2.

## Patentansprüche

**1.** Verfahren zur Polymerisation von (Meth-)Acrylmonomeren und gegebenenfalls von nichtacrylischen vinylischen Comonomeren, bei dem das (die) Monomer(e) in Gegenwart eines Startersystems polymerisiert werden, das (1) mindestens einen Starter und (2) ein Alkalimetallalkoholat umfaßt, dadurch gekennzeichnet, daß das Alkalimetallalkoholat die Formel R'OM' hat, wobei M' ein Alkalimetall darstellt und R' der Formel

$$R^1(OR^2)_m$$

entspricht, in der $R^1$ einen linearen oder verzweigten Alkylrest mit 1 bis 6 Kohlenstoffatomen oder einen Arylalkylrest darstellt; $R^2$ ein linearer oder verzweigter Alkylenrest mit 2 bis 4 Kohlenstoffatomen ist; und m eine ganze Zahl 1, 2 oder 3 ist.

2. Verfahren nach Anspruch 1, dadurch gekennzeichnet, daß der Starter monofunktionell ist und aus Verbindungen der Formel

$$(R)_p\text{-}M$$

ausgewählt ist, in der gilt:

- M bezeichnet ein Alkali- oder Erdalkalimetall (Wertigkeit p von 1 oder 2); und
- R bezeichnet einen geradkettigen oder verzweigten Alkylrest mit 2 bis 6 Kohlenstoffatomen oder einen gegebenenfalls substituierten Arylrest oder einen mit mindestens einer Phenylgruppe substituierten Alkylrest mit 1 bis 6 Kohlenstoffatomen.

3. Verfahren nach Anspruch 2, dadurch gekennzeichnet, daß der monofunktionelle Starter ausgewählt ist aus n-Butyllithium, sec-Buthyllithium, $\alpha$-Methylstyryllithium, 1,1-Diphenylhexyllithium, Diphenylmethyllithium, Diphenylmethylnatrium oder Diphenylmethylkalium und 1,1-Diphenyl-3-methylpentyllithium.

4. Verfahren nach Anspruch 1, dadurch gekennzeichnet, daß der Starter bifunktionell ist und ausgewählt ist aus den Verbindungen 1,1,4,4-Tetraphenyl-1,4-dilithiobutan (TPDLB), 1,1,4,4-Tetraphenyl-1,4-dinatriumbutan, Naphtalinyllithium, Naphtalinylnatrium, Naphtalinylkalium und deren Homologen.

5. Verfahren nach Anspruch 1, dadurch gekennzeichnet, daß das Alkoholat/Starter-Molverhältnis zwischen 1 und 50 liegt.

6. Verfahren nach einem der Ansprüche 1 bis 5, dadurch gekennzeichnet, daß die Polymerisation bei einer Temperatur zwischen -100 °C und +60 °C stattfindet.

7. Verfahren nach Anspruch 6, dadurch gekennzeichnet, daß man Methylmethacrylat in Gegenwart eines apolaren Lösemittels polymerisiert.

8. Verfahren zur Herstellung eines Zweiblockcopolymers der Struktur A-B, in der A und B eine Sequenz eines Acrylmonomers, Methacrylmonomers oder nichtacrylischen vinylischen Monomers darstellt, wobei mindestens A oder B eine acrylische Sequenz ist, wobei man bei diesem Verfahren in einem ersten Vefahrensschritt die anionische Polymerisation eines Monomers A in Gegenwart des in einem der Ansprüche 1 bis 5 definierten Startersystems durchführt, um ein lebendes Kettenglied $A^-$ der Polymersequenz A zu halten, und man in einem zweiten Verfahrensschritt das lebende Kettenglied $A^-$ mit einem Monomer B in Gegenwart eines Startersystems des ersten Verfahrensschrittes reagieren läßt.

9. Verfahren nach Anspruch 8, bei dem A und B eine Sequenz eines primären, sekundären oder tertiären Alkylacrylatmonomers oder Alkylmethacrylatmonomers darstellen.

10. Verfahren zur Herstellung eines Dreiblockcopolymers der Struktur A-B-C, bei dem die Blöcke A, B und C eine Sequenz nichtacrylischer vinylischer, methacrylischer oder acrylischer Monomere darstellen, wobei mindestens einer dieser Sequenzen eine acrylische Sequenz ist und mindestens einer der Blöcke A und C sich vom Block B unterscheidet, wobei man bei diesem Verfahren in einem ersten Verfahrensschritt eine anionische Polymerisation mindestens eines Monomers A in Gegenwart des Startersystems gemäß einem der Ansprüche 1 bis 5 durchführt, um ein lebendes Kettenglied $A^-$ zu erhalten, und man dann in einem zweiten Verfahrensschritt das lebende Kettenglied mit mindestens einem Monomer B reagieren läßt, um ein lebendes Zweiblockcopolymer $(A\text{-}B)^-$ zu erhalten, und man dann in einem dritten Verfahrensschritt dieses Copolymer $(A\text{-}B)^-$ mit mindestens einem Copolymer C reagieren läßt, um ein lebendes Dreiblockcopolymer $(A\text{-}B\text{-}C)^-$ zu bilden, und man dann in einem vierten Verfahrensschritt das Copolymer $(A\text{-}B\text{-}C)^-$ mit mindestens einer protolytischen Verbindung reagieren läßt.

11. Verfahren nach Anspruch 10, bei dem man ein Dreiblockcopolymer der Formel A-B-A bildet, wobei A und B Sequenzen primärer, sekundärer oder tertiärer Alkylacrylatmonomere oder Methacrylatmonomere oder nichtacrylischer vinylischer Monomere sind.

**12.** Verfahren zur Herstellung eines Dreiblockcopolymers der Formel A-B-A, wobei A und B primäre, sekundäre oder tertiäre Alkylacrylatmonomere oder Methacrylmonomere oder nichtacrylische vinylische Monomere darstellen, wobei mindestens eine der Sequenzen eine acrylische Sequenz darstellt, wobei man bei diesem Verfahren eine anionische Polymerisation mindestens eins Monomers B in Gegenwart eines Startersystems nach einem der Ansprüche 1, 4 oder 5 durchführt, bei dem der Starter ein bifunktioneller Starter ist, um ein lebendes Kettenglied $^-B^-$ zu erhalten, man dann dieses lebende Kettenglied mit mindestens einem Monomer A reagieren läßt, um ein lebendes Dreiblockcopolymer $^-(A\text{-}B\text{-}A)^-$ zu erhalten, und man das erhaltene Copolymer $^-(A\text{-}B\text{-}A)^-$ mit mindestens einer protolytischen Verbindung reagieren läßt.

**13.** Verfahren zur Herstellung eines sternförmigen Blockcopolymers der Formel

$$\left[\begin{matrix}(PA\text{-}PB\text{-}PC)_n \\ \\ (PD\text{-}PE)_m\end{matrix}\right]\!\!-X$$

in der
entweder:

- PA einen Polymerblock aus mindestens einem Monomer A darstellt, ausgewählt aus methacrylischen und nichtacrylischen vinylischen Monomeren;
- PB einen Polymerblock aus mindestens einem acrylischen Monomer B darstellt; und
- PC gegebenenfalls vorhanden ist, wobei es in diesem Fall einem Polymerblock aus mindestens einem methacrylischen Monomer C darstellt;

oder:

- PA und PC jeweils einen Polymerblock aus demselben Acrylmonomer darstellen; und
- PB einen Polymerblock aus mindestens einem Monomer B darstellt, ausgewählt aus Methacrylmonomeren;
- PD einen Polymerblock aus mindestens einem Monomer D darstellt, ausgewählt aus methacrylischen und nichtacrylischen vinylischen Monomeren, und gleichzeitig PE einen Polymerblock aus mindestens einem Acrylmonomeren E darstellt; oder PD einen Polymerblock aus mindestens einem Acrylmonomer D darstellt und gleichzeitig PE einen Polymerblock aus mindestens einem Methacrylmonomer E darstellt;
- n die Zahl der Verzweigungen aus (PA-PB-PC) darstellt und zwischen 2 und 50 einschließlich liegt; und m die Zahl der Verzweigungen (PD-PE) darstellt und zwischen 0 und 18 einschließlich liegt, mit der Maßgabe, daß die Summe n+m nicht den Wert 50 überschreitet;
- jeder der Verzweigungen (PA-PB-PC) und (PD-PE) außerdem nur einen einzigen Polymerblock enthalten kann, wobei in diesem Fall die zwei Blöcke verschieden voneinander sind, und zwar ist der eine ein Acrylmonomer und der andere ein Monomer, ausgewählt aus methacrylischen und nichtacrylischen vinylischen Monomeren; und
- X einen vernetzten Knoten aus mindestens einem polymerisierten Monomer Mr darstellt, wobei das Monomer Mr aus mindestens einem multifunktionellen Vernetzungsreagenz besteht, das mindestens zwei polymerisierbare Doppelbindungen pro Molekül aufweist, wobei das Verfahren die folgenden Verfahrensschritte umfaßt:

(1) Man führt die anionische Polymerisation mindestens eines Monomers A mit Hilfe des Startersystems nach einem der Ansprüche 1 bis 5 durch, um ein lebendes Kettenglied des Polymerblocks $PA^-$ zu erhalten, dann
(2) läßt man das auf diese Weise erhaltene lebende Kettenglied mit mindestens einem Monomer B reagieren, um das lebende Zweiblockcopolymer $(PA\text{-}PB)^-$ zu erhalten, dann
(3) läßt man das auf diese Weise erhaltene Zweiblockcopolymer mit mindestens einem Monomer C reagieren, um das lebende Dreiblockcopolymer $(PA\text{-}PB\text{-}PC)^-$ zu erhalten; der Schritt (3) kann ausgelassen werden und das Verfahren kann begonnen werden, indem der Schritt (1) mit dem Monomer B durchgeführt wird oder auch indem man nur den lebenden Block $PA^-$ oder $PB^-$ oder $PC^-$ bildet;
(4) gegebenenfalls bildet man ein lebendes Zweiblockcopolymer $(PD\text{-}PE)^-$, indem man wie in (1) und (2) verfährt, jedoch indem man von mindestens einem Monomer D und mindestens einem Monomer E ausgeht; oder man bildet einen lebenden Block $PD^-$ oder $PE^-$, indem man den Schritt (1) mit den Monomeren D oder E durchführt;

(5) man läßt das lebende Copolymer $(PA-PB-PC)^-$ oder $(PA-PB)^-$ oder $(PB-PC)^-$ oder den lebenden Block $PA^-$ oder $PB^-$ oder $PC^-$, gegebenenfalls in Mischung mit dem lebenden Zweiblockcopolymer $(PD-PE)^-$oder dem gemäß (4) erhaltenen lebenden Block $PD^-$ oder $PE^-$ in dem Milieu, das zur Durchführung ihrer Polymerisation auf anionischem Wege dient, mit mindestens einem Monomer Mr in molarem Überschuß von 4 bis 26 pro aktivem Zentrum reagieren, und man desaktiviert die Doppelbindungen durch eine Reaktion mit einer Protonenquelle, die insbesondere aus einem Alkohol, Wasser oder einer Protonensäure besteht; und

(6) gegebenenfalls führt man eine Umesterung im sauren Milieu des erhaltenen sternförmigen Copolymers durch.

**14.** Verfahren nach Anspruch 13, bei dem man ein sternförmiges Blockcopolymer der Formel $(PA-PB)_nX$ bildet, bei dem PA und PB, identisch oder verschieden, Polymerblöcke aus primären, sekundären oder tertiären Alkylacrylatmonomeren oder nichtacrylischen vinylischen oder methacrylischen Monomeren darstellt, wobei mindestens einer der Blöcke ein Acrylblock ist und n gleich einer ganzen Zahl zwischen 2 und 50 ist.

**15.** Zweiblockcopolymer, erhalten nach dem Verfahren nach Anspruch 8, mit der Struktur A-B, in dem A einen primären Alkylacrylatmonomerblock darstellt und B einen Block aus einem methacrylischen oder primären, sekundären oder tertiären Alkylacrylatmonomeren darstellt, wobei die zahlenmittlere Molekularmasse des Copolymers zwischen 5.000 und 500.000 liegt und der Polydispersitätsindex weniger oder gleich 1,2 beträgt.